(19) Europäisches Patentamt
European Patent Office
Office européen des brevets

(11) **EP 0 891 078 B1**

(12) **EUROPEAN PATENT SPECIFICATION**

(45) Date of publication and mention
of the grant of the patent:
**18.08.2010 Bulletin 2010/33**

(51) Int Cl.:
*H04N 1/60* (2006.01)

(21) Application number: **98305526.0**

(22) Date of filing: **10.07.1998**

(54) **Colour correction apparatus and method for an image system**

Farbkorrekturvorrichtung und -verfahren für ein Bildsystem

Appareil et procédé de correction de couleurs pour un système d'image

(84) Designated Contracting States:
**DE GB IT**

(30) Priority: **10.07.1997 KR 9731875**

(43) Date of publication of application:
**13.01.1999 Bulletin 1999/02**

(73) Proprietor: **SAMSUNG ELECTRONICS CO., LTD.
Kyonggi-do (KR)**

(72) Inventor: **Kim, Eun-jin
Mapo-gu,
Seoul (KR)**

(74) Representative: **Benson, Christopher et al
Harrison Goddard Foote
Fountain Precinct
Balm Green
Sheffield
S1 2JA (GB)**

(56) References cited:
EP-A- 0 687 103      EP-A- 0 741 491
EP-A- 0 769 869      EP-A1- 0 562 971
US-A- 5 452 112      US-A- 5 481 380
US-A- 5 537 516

**Description**

The present invention relates to a colour correction apparatus and method thereof for an image system.

Conventionally, an image system is intended to mean a system which acquires, processes, outputs, converts, transmits, improves, etc. image signals to achieve a desired aim. For example, an image system comprising a printer and a scanner is well known. In particular, a multifunctional machine which integrates the printer and scanner and performs a document output function is a good example of an image system.

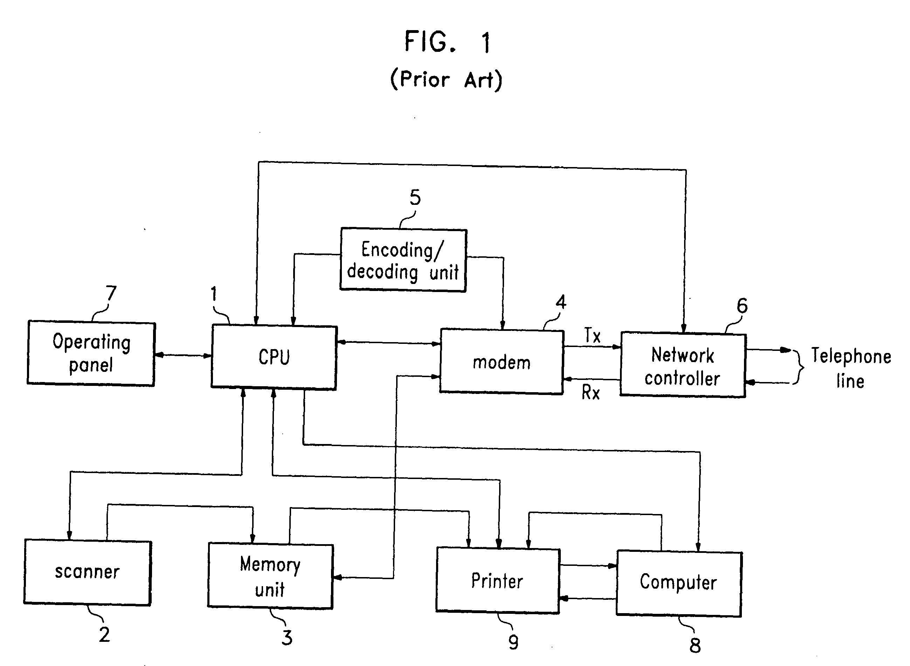

FIG. 1 is a schematic block diagram of a conventional multifunctional machine.

As shown in Figure 1, the conventional multifunctional machine includes a central processing unit (CPU) 1 which controls and processes data according to a specified program; a scanner 2 which transmits digital image data to the CPU 1 by converting the characteristics of a document to be transmitted into electrical signals according to the optical characteristic; a memory unit 3 which stores program data, protocol data, character data and recorded audio data and accesses or stores the data according to instructions from the CPU 1; a modem 4 which modulates the data output from the CPU 1 into an analogue format and demodulates the received input signal and then outputs them under the control of the CPU 1; an encoding/decoding unit 5 which encodes or decodes the data under the control of the CPU 1 for efficiently processing the data input to/output from the modem 4; a network controller 6 which forms a communication loop of a telephone line and provides an interface between a signal of the modem 4 and a signal of the telephone line under the control of the CPU 1; an operating panel 7 equipped with a plurality of keys and a display device, via which various commands can be input and information can be displayed under the control of the CPU 1; a computer which has a main memory and an auxiliary memory; and a printer 9 which prints the original information through an optional transmission line or prints the data stored in a computer 8.

The scanner 2 which is a typical colour image input unit is the most common means for scanning printed data, photographs, figures or characters formed manually, and it is an essential component of a multifunctional machine, a document translating machine, CAD computer, facsimile, or a character recognition machine.

After illuminating an object, for example a document, with light having a certain light-emitting spectrum, the scanner 2 performs a photoelectric conversion which converts the optical information which is reflected from the object into an electrical signal using a photoelectric conversion device such as a charge coupled device (CCD), thereby acquiring the image information.

In addition, the printer 9, which is a typical image output device, is a device for recognizing and storing the data which is processed by the computer and then outputting the data into a document format. It is an essential component part of a multifunctional machine, personal computer (PC), facsimile, electronic cash register, and cash dispenser. Conventionally, a daisy wheel printer, pin printer, ink jet printer, or a laser printer is used (most commonly an ink jet or laser printer).

Due to colour printers such as a colour laser printer, a colour ink jet printer and devices equipped with printers as essential component parts, printing the document including the colour image data and characters is gradually spread. Multicolour images can be printed on a printable medium by utilizing a plurality of toners in the case of the colour laser printer, and a plurality of ink cartridges in the case of the colour ink jet printer. Conventionally, the colour printer realizes multiple colours using a YMCK (Yellow, Magenta Cyan blacK) method. In other words, by using toner or ink having four colours of yellow, magenta, cyan and black, the multiple colours can be realized.

As the supply of colour printers increases, high quality or high definition printing is a prime consideration, rather than the resolution of the printed image which is a prime consideration in the case of black and white printing.

The colour image of the image system can be obtained through a colour resolution process which extracts the size of the optical information over the spectrum band having three (3) waves of red, green and blue from a multicoloured visible image.

The colour reproduction characteristic of a colour image is determined according to whether the colour resolution characteristic maintains a linear relation to the optical system of a human being. At this time, when the spectrum characteristic, i.e., energy ratio per three waves and the size of the absolute light quantity maintain the linear relation to the visual characteristic of the human optical system, regardless of the operating conditions, a good colour reproduction characteristic can be obtained.

A spectral optical system comprising the illuminating light, image sensor and a colour resolution filter has the individual variation in which a minute difference between the characteristics is generated. Moreover, the spectral optical system has an age-based variation in which the characteristics are changed based on time, according to the variation of an operating condition, such as operating temperature. Since these variations cause the linear colour reproduction characteristic to be distorted, it is necessary to properly control the spectrum characteristic, individual variation and aged-based variation of the light quantity in order to maintain a good colour reproduction characteristic.

There are known prior art devices adapted to maintain the correct colour temperature by controlling the electrical operating conditions such as the current and voltage of the illuminating light and by controlling the spectrum characteristic and light quantity, and having a means for amplifying the electrical output signal of a sensor for controlling the individual variation of the image sensor.

However, in order for the operating condition of the spectral optical system (comprising the illuminating light, image sensor and the colour resolution filter) to maintain a linear relation to the visual characteristic of the human optical system, it is not enough to control each of the component parts individually. In other words, it is necessary to control the spectrum characteristic over the entire system.

To comply with those necessities, there exists prior art disclosing the conventional colour correction apparatus and methods which correct the spectrum characteristic of the spectral optical system and the individual variation of the light quantity in an image system.

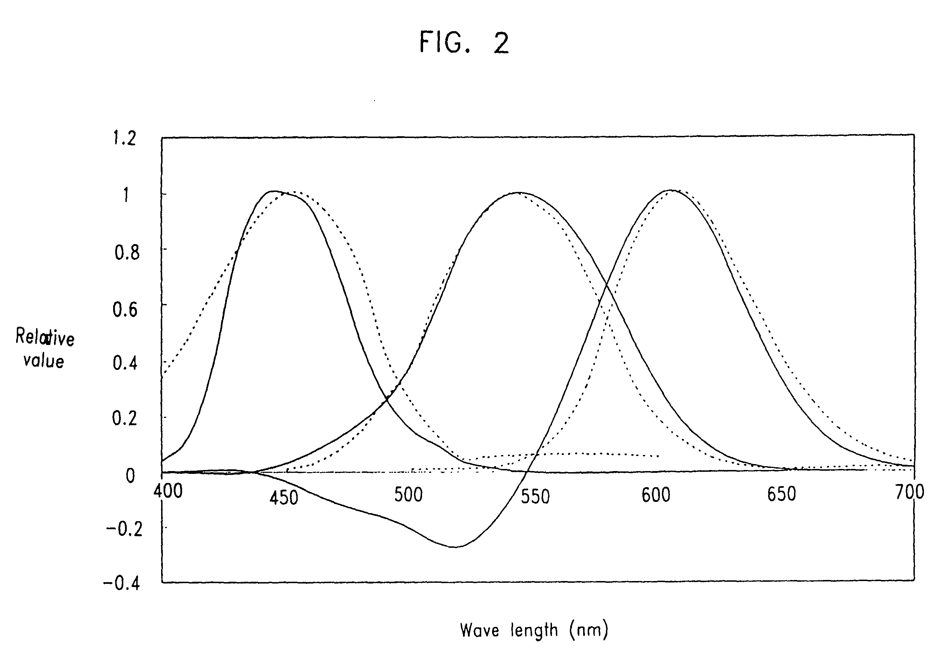

FIG. 2 is a waveform illustrating the visual characteristic of the human optical system and the spectral spectrum characteristic of the image system. In Figure 2, the dotted line waveform indicates the spectral spectrum characteristic of the image system. The solid line waveform indicates the vision of a reference human observer as defined by the Commission International de l'Eclairage (CIE).

Referring to FIG. 2, the colour correction process is performed by allowing the visual characteristic of the human optical system (indicated by the solid line) to be aligned with the spectral spectrum characteristic of the image system (indicated by the dotted line).

The colour correction process is performed through mathematical operations which are very complicated. It is necessary to acquire the cooperation of a volunteer. The colour correction process is carried out by one of three methods for setting the correlation between the visual characteristic of the human optical system and the spectral spectrum characteristic of the image system: a linear transformation method; a polynomial transformation method; or a 3-dimensional look-up table method.

Firstly, the linear transformation method is explained below. Assuming that the wave is $\lambda$, the spectrum characteristic of the reflected colour is $C(\lambda)$, and the colour resolution filters of red, green and blue colours of the image input system are $f_R(\lambda)$, $f_G(\lambda)$ and $f_B(\lambda)$, respectively. Outputs $S_R$, $S_G$ and $S_B$ of the image sensors of red, green and blue colours are as follows.

$$S_G = \int C(\lambda) f_G(\lambda) d\lambda$$

$$S_B = \int C(\lambda) f_B(\lambda) d\lambda \tag{1}$$

Here, the integrating range has the wave bandwidth of 380nm to 780nm which is the range of the visible ray. Representing the characteristics of the colour resolution filters of red, green and blue colours as $I_R(\lambda)$, $I_G(\lambda)$ and $I_B(\lambda)$, the outputs of the image sensors of ideal red, green and blue colours $P_R$, $P_G$ and $P_B$ are as follows.

$$P_R = \int C(\lambda) I_R(\lambda) d\lambda$$

$$P_G = \int C(\lambda) I_G(\lambda) d\lambda$$

$$P_B = \int C(\lambda) I_B(\lambda) d\lambda \tag{2}$$

In the formula (2), assuming that estimated values of $I_R(\lambda)$, $I_G(\lambda)$ and $I_B(\lambda)$ are $\underline{I_R}(\lambda)$, $\underline{I_G}(\lambda)$ and $\underline{I_B}(\lambda)$, the $\underline{I_R}(\lambda)$, $\underline{I_G}(\lambda)$ and $\underline{I_B}(\lambda)$ are indicated as follows.

$$\underline{I_R} = a_{11} f_R(\lambda) + a_{12} f_G(\lambda) + a_{13} f_B(\lambda)$$

$$\underline{I_G} = a_{21} f_R(\lambda) + a_{22} f_G(\lambda) + a_{23} f_B(\lambda)$$

$$\underline{I_B} = a_{31} f_R(\lambda) + a_{32} f_G(\lambda) + a_{33} f_B(\lambda) \tag{3}$$

Here, $a_{11}$, $a_{12}$, $a_{13}$, $a_{21}$, $a_{22}$, $a_{23}$, $a_{31}$, $a_{32}$ and $a_{33}$ are real numbers, which are coefficients for reflecting gains of the relevant colour resolution filters. At this time, outputs $\underline{P_R}$, $\underline{P_G}$ and $\underline{P_B}$ of the estimated image sensors are indicated as follows.

$$P_R = a_{11}\int f_R(\lambda)\,C(\lambda) + a_{12}\int f_G(\lambda)\,C(\lambda) + a_{13}\int f_B(\lambda)\,C(\lambda)$$

$$P_G = a_{21}\int f_R(\lambda)\,C(\lambda) + a_{22}\int f_G(\lambda)\,C(\lambda) + a_{23}\int f_B(\lambda)\,C(\lambda)$$

$$P_B = a_{31}\int f_R(\lambda)\,C(\lambda) + a_{32}\int f_G(\lambda)\,C(\lambda) + a_{33}\int f_B(\lambda)\,C(\lambda) \qquad (4)$$

Referring to formula 1, the formula 4 can be expressed

$$\begin{bmatrix} P_R \\ P_G \\ P_B \end{bmatrix} = \begin{bmatrix} a_{11} & a_{12} & a_{13} \\ a_{21} & a_{22} & a_{23} \\ a_{31} & a_{32} & a_{33} \end{bmatrix} \begin{bmatrix} S_R \\ S_G \\ S_B \end{bmatrix}$$

with a matrix as follows.

$$(5)$$

The colour correction based on the linear transformation method is performed using the formula (5).

Secondly, the polynomial transformation method is explained. This method is similar to the above-described linear transformation method in relation to performing the colour correction by forming an optimum matrix. Whilst the linear transformation method only uses the outputs $S_R$, $S_G$ and $S_B$ of the image sensors of red, green and blue colours, the polynomial transformation method uses the outputs $S_R$, $S_G$ and $S_B$, their square terms of $S_R^2$, $S_G^2$ and $S_B^2$, their multiplying terms of $S_R S_G$, $S_R S_B$ and $S_G S_B$, and their constant terms, thereby optimizing the 3 x 9 matrix. These are expressed in a matrix related formula.

$$\begin{bmatrix} P_R \\ P_G \\ P_B \end{bmatrix} = \begin{bmatrix} a_{11} & a_{12} & a_{13} & a_{14} & a_{15} & a_{16} & a_{17} & a_{18} & a_{19} \\ a_{21} & a_{22} & a_{23} & a_{24} & a_{25} & a_{26} & a_{27} & a_{28} & a_{29} \\ a_{31} & a_{32} & a_{33} & a_{34} & a_{35} & a_{36} & a_{37} & a_{38} & a_{39} \end{bmatrix} \begin{bmatrix} S_R \\ S_G \\ S_B \\ S_R^2 \\ S_G^2 \\ S_B^2 \\ S_R S_G \\ S_R S_B \\ S_G S_B \end{bmatrix} + \begin{bmatrix} k_1 \\ k_2 \\ k_3 \end{bmatrix}$$

$$(6)$$

Thirdly, the 3-dimensional look-up table method is explained. It is a method of forming a look-up table by corresponding the $P_R$, $P_G$ and $P_B$ to each of the $S_R$, $S_G$ and $S_B$ in the RGB colour coordinate system. In the case that each of the R, G, B colours is quantized in a 8-bit, the size of the look-up table is $2^8$ x $2^8$ x $2^8$, i.e., $2^{24}$, and thereby a large amount of memory is required and it takes much time to make up the look-up table. In order to solve the problem, the 3-dimensional RGB space is divided into small sized 3-dimensional spaces and the look-up table is formed regarding these points. Afterwards, regarding points which are included in the small sized 3-dimensional space and excluded from the look-up table, a method for analogizing a interpolation has been tried.

With respect to the accuracy of the colour correction, the three above-described colour correction methods are ranked in the following order: the 3-dimensional look-up table method, the polynomial transformation method and finally the linear transformation method. Regarding the cost for realizing the colour correction, the methods are ranked in the following order: the linear transformation method, the polynomial transformation method and (most expensive) the 3-dimensional look-up table method.

Accordingly, the selection of the colour correction method can be decided according to the designing target and technological aim for the colour correction environment.

Conventionally, since the colour reproduction assumes that the human optical system and the visual characteristic is not accurately prescribed with a specific function, the 3-dimensional look-up table method which maps the relation between an input mapping and the visual characteristic to 1:1 is the most essential approaching method.

On the other hand, the linear transformation method and polynomial transformation method which are transformed by the matrix perform the colour correction by connecting the input/output characteristics of the image system and the visual characteristic to the specific function. Since these two methods can simply perform the colour corrections, they are widely used.

The accuracy of the linear transformation method and polynomial transformation method depends on the input/output characteristics of the image system and the linear transformation possibility to the colour coordinate system to be corrected. Generally, when the RGB colour coordinate system is mutually converted into the XYZ colour coordinate system linearly, the linear transformation method can be used. However, when the RGB colour coordinate system is converted non-linearly into the YMCK (Yellow Magenta Cyan blacK) colour coordinate system, which is the typical colour space in the field of printing used in a device using colours such as the printer or CIE L*a*b, the polynomial transformation method or the 3-dimensional look-up table method is usually used.

Physically, nine multipliers and three adders are required in the linear transformation method, and twenty-seven multipliers and twenty-seven adders are required in the polynomial transformation method. In the case of 3-dimensional look-up table method, when each of RGB colours is 8 bit, a storage space of $2^{16}$ byte is required.

For reference, CIE L*a*b is an equal perception space recommended by the CIE in 1976, which is the perception space having an even difference among the three reference colours. Its formal name is CIE1976L*a*b.

Below, the term "colour specification system" is explained:

The amount of the three primary colours which satisfies the matching colour condition by the combination of the three primary colours can be defined as the colour specification.

In 1931, in order to solve the inconvenience of the RGB colour coordinate system in which the value of red colour is negative (-) in the wavelength of 440 to 545nm, the CIE defined an XYZ colour coordinate system having three primary colours wherein red has a wavelength of 700nm, green has a wavelength of 546.lnm and blue has a wavelength of 435.8nm, respectively.

In other words, the XYZ colour coordinate system of the CIE sets new primary colours of X, Y, Z, removes the negative quantity, and then selects three primary colours so that a triangle formed by the new primary colours can includes a spectrum colour path in its inner part. Here, the three primary colours are virtual colours and the values of X, Y and Z are conventionally called tri-stimuli.

Since each of the primary colours in the XYZ colour coordinate system is virtual, it is set to satisfy the following conditions.

First, all colours can be matched by mixing the fixed quantity of the primary colours. That is, the triangle formed by the primary colours of X, Y and Z surrounds the spectrum. Second, the primary colours of X and Z are located on the plane of the RGB space whose luminance is zero. That is, only the primary colour Y has the stimulus on the luminance, and the primary colours X and Z have only the colours and chroma.

At this time, the conversion formula of the colour coordinate system is as follows.

$$\begin{bmatrix} X \\ Y \\ Z \end{bmatrix} = \begin{bmatrix} 0.608 & 0.174 & 0.200 \\ 0.299 & 0.587 & 0.114 \\ 0.000 & 0.0662 & 1.112 \end{bmatrix} \begin{bmatrix} R \\ G \\ B \end{bmatrix}$$

（７）

Here, the formula Y = 0.299R + 0.587G + 0.114B is a RGB signal and it is the typical conversion formula used when combining to the luminance signal Y.

Below, the conventional colour correction apparatus and method of using the test pattern in the image system are explained.

After scanning the preset test pattern through the image input unit, the colour correction is performed by comparing an output test pattern output through the image output device with the preset test pattern either with the naked eye, or by comparing the measured results of the test pattern and the output test pattern after measuring the patterns using a colorimeter.

In the case of the colour correction performed with the naked eye, since the colour distortion characteristic generated by the image system can be discriminated by the naked eye, the subjective element can be included in determination and there is a physical difficulty in finding the exact colour distortion characteristic. Moreover, the operator who performs the colour correction should have much knowledge about the colour signal.

In the case of the colour correction performed by the colorimeter, there is an economic burden to prepare the costly colorimeter. Moreover, since the colour correction process cannot be automated, it takes much time for the operator. Similarly, the operator who performs the colour correction should have much knowledge about the colour signal.

Using the colour correction apparatus and method in the image system according to the conventional art (including the colour correction apparatus and method using the conventional test pattern), the colour correction to a certain part is accomplished by correcting the spectrum characteristic of the spectral optical system and the individual variation of the light quantity. However, they cannot properly cope with the age-based variation which is generated by the operating condition or the environmental difference when performing the colour correction of the image system.

Furthermore, in the conventional image system, the colour image input unit is used attached to another image device having different colour reproduction characteristics such as a monitor, printer and a communication device instead of being used separately. Currently, since the colour reproduction characteristics of each image device are different, a technology capable of performing a device-independent colour correction would be desirable.

The invention is as set out in claims 1 and 9.

Therefore, it is an object of the present invention to perform a colour correction adaptively according to a spectrum characteristic of a spectral optical system, age-based variation and an individual variation of the light quantity in order to perform the colour correction regardless of the spectrum characteristic of the spectral optical system, age-based variation and the individual variation of the light quantity. The colour correction is performed in order that the spectrum characteristic can have a linear relation to the human visual system.

Preset reference colorimetric data relating to a test pattern for measuring the colour correction is stored in a storage medium, and the colour correction process is performed in order to reduce the error between scanning data obtained by scanning the measured test pattern and the reference colorimetric data to the minimum, thereby scanning a prescribed measuring test pattern document. As a result, the colour correction process is automatically performed.

It is another object of the present invention to provide a colour correction apparatus and method thereof for an image system capable of performing a gray level correction prior to performing the colour correction in order to acquire the linearity of gray level characteristics regarding each spectrum of RGB colours.

According to one aspect of the present invention, there is provided a colour correction apparatus for an image system including a photoelectric conversion unit which radiates an illuminating light having a certain light emitting spectrum to an object and outputs spectral information regarding each of RGB colours of reflected from said object after converting the information into electrical signals, said apparatus comprising: first reference data storage means for storing reference gray level data and reference colorimetric data measured from an achromatic test pattern and a chromatic test pattern, respectively, of a preset test pattern by accumulating the data in a database system; system; correction coefficient calculating means for calculating a grey level correction coefficient matrix which reduces an error between a grey level scanning data obtained by scanning the achromatic test pattern through said photoelectric conversion unit, the reference grey level data to a minimum, performs a liner transformation applying the grey level correction coefficient matrix to a colorimetric scanning data obtained by scanning said chromatic test pattern through said photoelectric conversion unit, wherein the correction coefficient calculating means calculates a colour correction coefficient matrix which reduces an error between the colorimetric scanning data and said reference colorimetric data to a minimum after receiving said colorimetric scanning data; and colour correction means for receiving said colour correction coefficient matrix from said correction coefficient calculating means and for performing a linear transformation applying said colour correction coefficient matrix to an output of said photoelectric conversion unit (20) and then outputting a result after converting into a certain colour coordinate system; wherein an achromatic color is divided equally on said achromatic test pattern at certain positions according to optical density, and wherein said chromatic test pattern uses a Macbeth color rendition chair on which a plurality of chromatic colors are divided equally at other positions.

Preferably, the correction coefficient calculating unit further includes a gray level correction coefficient calculating unit for calculating the gray level correction coefficient matrix which reduces an error between the gray level scanning data and said reference gray level data to the minimum after receiving said gray level scanning data obtained by scanning said achromatic test pattern through the photoelectric conversion unit.

Preferably, the colour correction unit further includes a gray level correction processing unit which receives said colour correction coefficient matrix from said gray level correction coefficient calculating unit, performs the linear transformation applying said gray level correction coefficient matrix to the output of said photoelectric conversion unit and then applies the outputs to said colour correction processing unit.

Preferably, the reference data storage unit includes: a reference gray level data storage unit which stores the reference gray level data measured through an optical densitometer from the achromatic test pattern of the test pattern by accumulating the data in the database system; and a reference colorimetric data storage unit which stores the reference colorimetric data measured through the colorimeter from the chromatic test pattern of the test pattern by accumulating the data in the database system.

Preferably, the correction coefficient calculating unit further comprises a colour correction conversion matrix calculating unit which calculates a colour correction conversion matrix through a matrix multiplication in the order of said gray level correction coefficient matrix and colour correction coefficient matrix. Preferably, the colour correction unit performs the linear transformation applying the colour correction conversion matrix to the output of the photoelectric conversion unit, and then outputs the output of the photoelectric conversion unit after converting into a specified colour coordinate system.

According to another aspect of the present invention, a colour correction method for an image system which performs the colour correction process through a linear transformation applying a colour correction conversion matrix to an input data obtained by scanning an input target document includes the steps of:

generating first scanning data of a first gray level scanning data and a first colorimetric scanning data by scanning an achromatic test pattern and a chromatic test pattern of a preset test pattern, respectively;
calculating a first gray level correction coefficient for calculating a first gray level correction coefficient matrix which reduces an error between a reference gray level data and said first gray level scanning data to the minimum by reading said reference gray level data from a storage medium which stores said reference gray data previously measured from said achromatic test pattern;
performing a first gray level correction for acquiring a linearity of gray level characteristics regarding each colour by generating a first gray level correction colorimetric data through the linear transformation applying said first gray level correction coefficient matrix to said first colorimetric scanning data;
calculating a first colour correction coefficient for calculating a first correction coefficient matrix which reduces an error between a reference colorimetric data and said first gray level correction colorimetric data to the minimum according to a specified colour correction method by reading the reference colorimetric data from the storage medium which stores said reference colorimetric data previously measured from the chromatic test pattern; and
calculating a first colour correction conversion matrix through the matrix multiplication in the order of said first gray level correction coefficient matrix and the first colour correction coefficient matrix and setting said first colour correction conversion matrix as said colour correction conversion matrix.

The colour correction of the image system preferably further includes the steps of:

generating an output test pattern including an achromatic output pattern and a chromatic output pattern by outputting a first colour correction data generated by the linear transformation applying said first colour correction conversion matrix to said first gray level scanning data and first colorimetric scanning data through a colour image output unit;
generating second scanning data of a second gray level scanning data and a second colorimetric scanning data by scanning the achromatic output pattern and chromatic output pattern included in said output test pattern, respectively;
calculating a second gray level correction coefficient for calculating a second gray level correction coefficient matrix which reduces an error between said reference gray level data and said second gray level scanning data to the minimum by reading the reference gray level data from the storage medium which stores the reference gray level data; performing a second gray level correction for acquiring the linearity of gray level characteristics regarding each colour by generating a second gray level correction colorimetric data through the linear transformation applying said second gray level correction coefficient matrix to said second colorimetric scanning data; calculating a second colour correction coefficient for calculating a second colour correction coefficient matrix which reduces an error between said reference colorimetric data and said second gray level correction colorimetric data to the minimum according to a specified colour correction method by reading said reference colorimetric data from the storage medium which stores the reference colorimetric data; and calculating a second colour correction conversion matrix through the matrix multiplication in the order of the second colour correction coefficient matrix, second gray level correction coefficient matrix and said first colour correction conversion matrix, and setting the second colour correction conversion matrix as said colour correction conversion matrix.

A more complete appreciation of the present invention, and many of the attendant advantages thereof, will become readily apparent with reference to the following detailed description as illustrated by the accompanying drawings in which like reference numerals indicate the same or similar components, wherein;

FIG. 1 is a schematic block diagram of a conventional multifunctional machine;
FIG. 2 is a waveform illustrating a visual characteristic of a human optical system and a spectral spectrum characteristic of an image system;
FIG. 3 is an illustrative view illustrating a test pattern used in a colour correction apparatus and method of colour correction in an image system according to the present invention;
FIG. 4 is a block diagram illustrating a colour correction apparatus ;
FIG. 5 is a schematic block diagram illustrating a preferred embodiment of the colour correction apparatus of the present invention;
FIG. 6 is a graph illustrating gray level characteristics of a conventional image system before performing a gray level correction;
FIG. 7 is a graph illustrating an ideal gray level correction;
FIGs. 8A and 8B are conceptual views illustrating a preferred embodiment of the colour correction apparatus of the present invention;
FIG. 9 is a flowchart illustrating colour correction method;
FIG. 10 is a flowchart illustrating a embodiment of a colour correction method according to the present invention;
FIG. 11 is a flowchart illustrating a further embodiment of the colour correction method according to the present invention;
FIG. 12 is a block diagram illustrating another embodiment of the colour correction apparatus according to the present invention;
FIGs. 13A and 13B are conceptual views illustrating another embodiment of the colour correction apparatus of the present invention; and
FIGs. 14A and 14B are a flow chart illustrating another embodiment of the colour correction method according to the present invention.

The objects, characteristics and advantages of the above-described invention will be more clearly understood through the preferred embodiments, described below by way of example only, with reference to the attached drawings.

A colour correction apparatus and method of colour correction in an image system according to the present invention are explained with reference to the attached drawings.

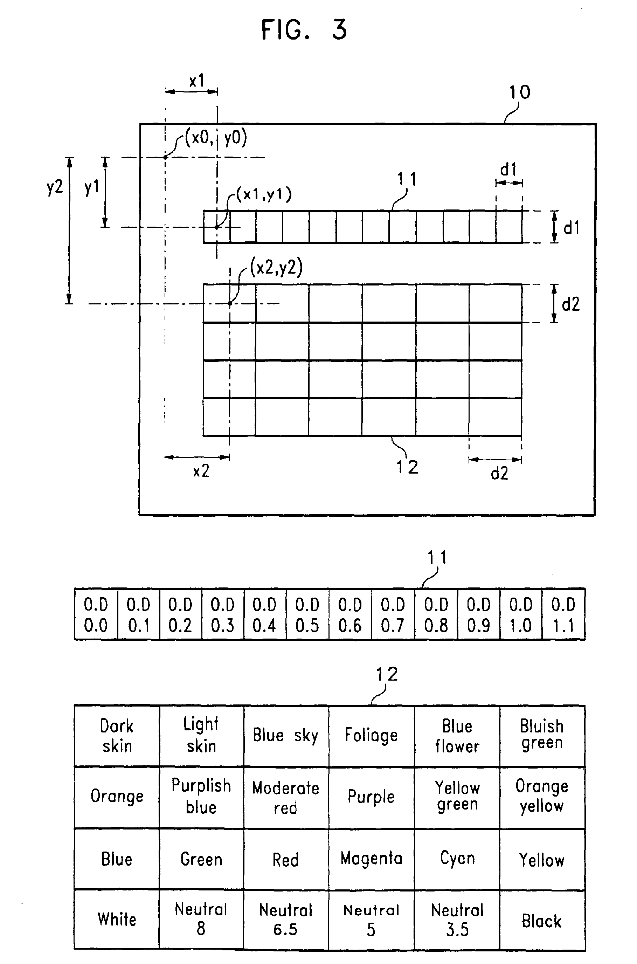

Prior to explaining the apparatus and method of the present invention, an embodiment of a test pattern which is used for calculating a colour correction conversion matrix in the present invention is explained for clarity with reference to FIG. 3.

As shown in Figure 3, the test pattern 10 includes an achromatic test pattern 11 on which an achromatic colour is evenly divided at predetermined positions according to the optical density; and a chromatic test pattern 12 on which a plurality of chromatic colours are divided at other positions.

In other words, the test pattern 10 includes the achromatic test pattern 11 on which the achromatic colour which is gradually divided according to the reflectance (i.e., the optical density) is evenly divided; and the chromatic test pattern 12 on which the chromatic colours such as red, green, blue, cyan, magenta, yellow, etc. are evenly divided.

In the test pattern 10, the achromatic test pattern 11 is for a gray level correction, and the chromatic test pattern 12 is for a colour correction. As the number of colours increases, the correction becomes more accurate and it takes more processing time to calculate a correction coefficient.

The geometrical arrangement of the test pattern 10 is important to accumulate a measuring data and a scanning data for calculating the correction coefficient in a database system. At the achromatic test pattern 11, the chromatic colour having optical density of OD 0.0 is located at position from (x0, y0) which is a reference starting point on a test pattern document to (x1, y1). The achromatic colour is horizontally equally divided maintaining an interval of dl in the width and length in the order of OD 0.1, OD 0.2, OD 0.3, OD 0.4, OD 0.5, OD 0.6, OD 0.7, OD 0.8, OD 0.9, OD 1.0 and OD 1.1.

In addition, the chromatic test pattern 12 comprises the chromatic colours equally divided in 4 rows and 6 columns. At positions from (x0, y0) which is the reference starting point to (x2, y2), a dark skin colour is positioned in the $1^{st}$ row and $1^{st}$ column. Next to the dark skin colour in the $1^{st}$ row, colours in the following order are positioned: light skin, blue sky, foliage, blue flower and bluish green. In the $2^{nd}$ row, colours in the following order are positioned: orange, purplish blue, moderate red, purple, yellow green and orange yellow. In the $3^{rd}$ row, colours in the following order are positioned: blue, green, red, magenta, cyan and yellow. Lastly, in the $4^{th}$ row, colours in the following order are positioned: white, neutral 8, neutral 6.5, neutral 5, neutral 3.5 and black.

All of the colours have the width and length of d2 and are equally divided horizontally and vertically. Generally, for the chromatic colours, a Macbeth colour rendition chart can be used.

There are several preconditions for performing the colour correction of the present invention. The first precondition is to provide the test pattern 10 including the aforesaid achromatic and chromatic colours. The second precondition is to store a reference gray level data (an optical density value) and a reference colorimetric data (a tri-stimuli value of the CIE-XYZ colour coordinate system), each measured through an optical densitometer and a colorimeter from the achromatic test pattern 11 and the chromatic test pattern 12 of the test pattern, into storage media respectively by accumulating in the database system.

The CIE-XYZ colour coordinate system is the colour coordinate system which is the foundation of chromatics. As described above, the CIE-XYZ colour coordinate system performs a coordinate conversion so that all colour matching functions can have a positive(+) value, and supplies tri-stimuli which are three new virtual primary colours corresponding to the colours of RGB of the CIE. The reason of converting the RGB colour coordinate system adopted by the colour image input unit into the CIE-XYZ colour coordinate system is that the CIE-XYZ colour coordinate system supplies a device-independent colour coordinate system.

Generally, in order to perform the colorimetric colour correction, it is essential that the spectral characteristic of a colour separation system of the colour image input unit (such as a scanner) approximates to the colour matching function.

In other words, the colorimetric colour correction is performed when a quality factor (QF) of a Neugebour of the system satisfying a Router condition approximates to 1. Under the condition, after obtaining an approximate function relation between the RGB colour coordinate system of the colour image input unit and the CIE-XYZ colour coordinate system, the approximate function is applied to the RGB colour coordinate system of the colour image input unit, thereby obtaining the device-independent CIE-XYZ colour coordinate system.

The reference gray level data and reference colorimetric data are measured through the minute optical densitometer in order to obtain the reliability. The optical density values of all the achromatic colours based on the achromatic test pattern 11 are measured through the optical densitometer and then accumulated in the database system. The tri-stimuli values of all the chromatic colours based on the chromatic test pattern 12 are measured through the colorimeter and then accumulated in the database system.

The colour correction process of the conventional image system including the present invention is performed through the linear transformation by applying the colour correction conversion matrix to the input data obtained by scanning the input target document. At this time, the accuracy of the colour correction conversion matrix determines the performance of the colour correction process which allows the linearity between the spectrum characteristic of the image system and the virtual characteristic of the human being.

The colour correction process of the image system is roughly divided into a colour correction conversion matrix calculating process for calculating the colour correction conversion matrix; and a colour correction process for performing the actual colour correction by applying the colour correction conversion matrix to the input data obtained by scanning the input target document. The operation of the latter is a simply calculating operation which applies the colour correction conversion matrix of the former to the input data. Accordingly, the operation of the former is very important in the technical aspect or operational aspect of the colour correction technology. Conventionally, the colour correction conversion matrix calculating process is performed when initializing the image system or when users determine that the colour correction is to be newly performed according to the changed operating condition or environment, rather than performing the process whenever the input data is applied.

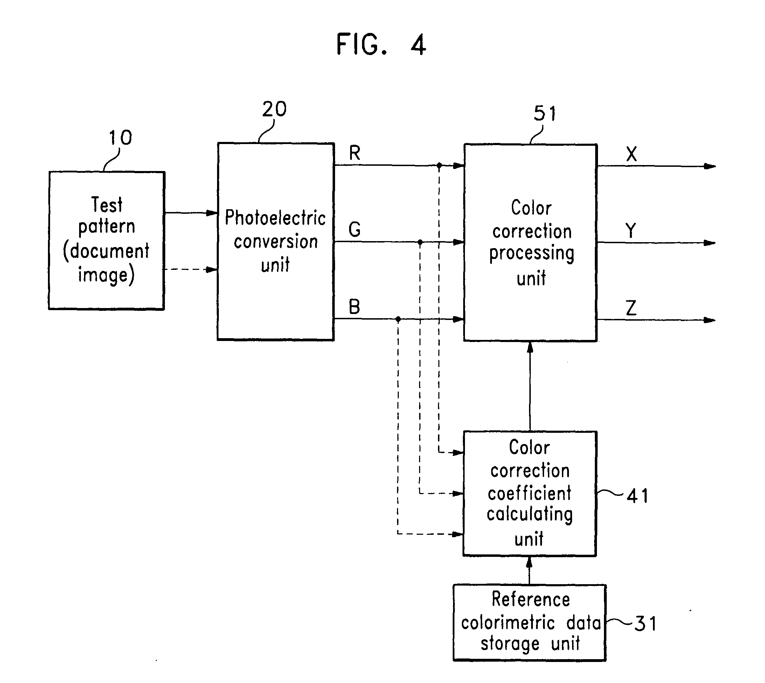

Hereinafter, one embodiment of the colour correction apparatus of the image system according to the present invention is explained with reference to FIG. 4.

FIG. 4 is a block diagram illustrating a colour correction apparatus, illustrating one example using a scanner which is a typical colour image input unit.

As shown in FIG. 4, colour correction apparatus includes a photoelectric conversion unit 20 which radiates an illuminating light having a certain light emitting spectrum to an object and outputs the spectral information regarding the RGB colours reflected from the object after converting into electrical signals, includes: a reference colorimetric data storage unit 31 which stores the reference colorimetric data measured from the chromatic test pattern 12 of the preset test pattern 10 by accumulating in the database system; a colour correction coefficient calculating unit 41 which calculates the colour correction coefficient matrix which reduces an error between the colorimetric scanning data and reference colorimetric data to the minimum after receiving the colorimetric scanning data obtained by scanning the chromatic test pattern 12 through the photoelectric conversion unit 20; and a colour correction processing unit 51 which receives the colour correction coefficient from the colour correction coefficient calculating unit 41, performs the linear transformation applying the colour correction coefficient matrix to the output of the photoelectric conversion unit 20, and then outputting the result after converting into a specified colour coordinate system.

The operation of the colour correction apparatus is based on the assumption that the test pattern 10 including the chromatic test pattern 12 comprising the chromatic colours is provided, and the reference gray level data which is the optical density value measured through the optical densitometer from the chromatic test pattern 12 of the test pattern 10 is stored in the reference colorimetric data storage unit 31.

First, the photoelectric conversion unit 20 equipped with the charged couple device (CCD) as a photoelectric conversion element radiates the illuminating light having a certain light-emitting spectrum to the object. Afterwards, the photoelectric conversion unit 20 converts the spectral information about each of the RGB colours reflected from the object into electrical signals and then outputs these signals.

The colour correction coefficient calculating unit 41 calculates the colour correction coefficient matrix which reduces the error between the colorimetric scanning data and reference colorimetric data to the minimum according to the specified colour correction method after receiving the colorimetric scanning data obtained by scanning the chromatic test pattern 12 through the photoelectric conversion unit 20. At this time, the colour correction method is performed through one of either the linear transformation method, the polynomial transformation method or the 3-dimensional look-up table method.

Next, the colour correction processing unit 51 receives the colour correction coefficient matrix from the colour correction coefficient calculating unit 41, performs the linear transformation applying the colour correction coefficient matrix to the output of the photoelectric conversion unit 20, and then outputs the result after converting into the CIE-XYZ colour coordinate system (the device-independent colour coordinate system).

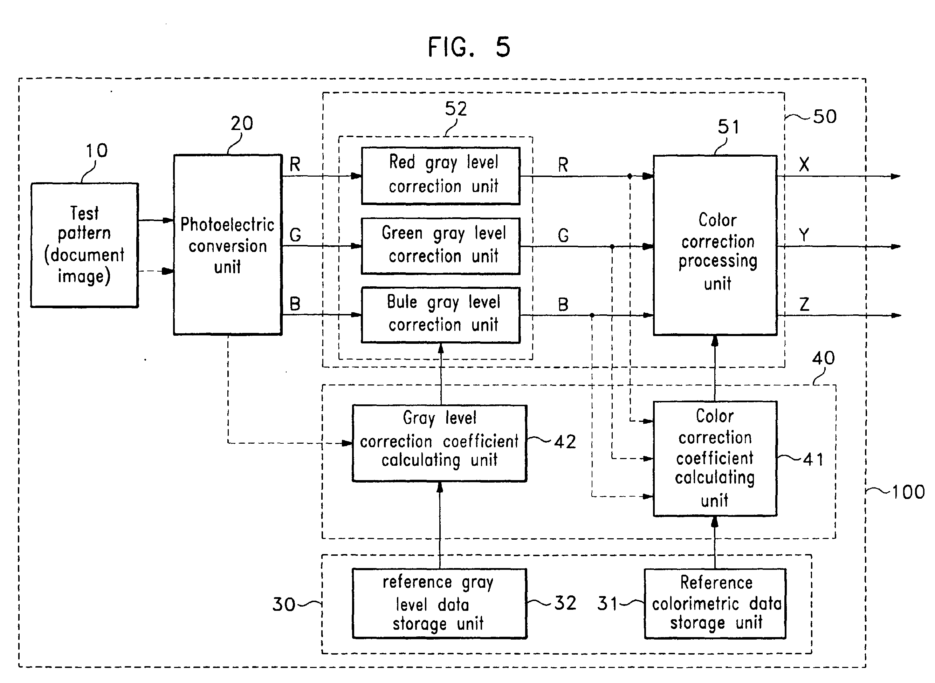

Hereinafter, a preferred embodiment of the colour correction apparatus according to the present invention is explained with reference to FIG. 5.

FIG. 5 is a block diagram illustrating an embodiment of the colour correction apparatus using the scanner which is a typical colour image input unit.

The same reference numerals are allotted to the same component parts which perform similar functions to the colour correction apparatus shown in FIG. 4.

As shown in FIG. 5, the colour correction apparatus 100, including the photoelectric conversion unit 20 which radiates the illuminating light having a certain light emitting spectrum to the object and outputs the spectral information regarding the RGB colours reflected from the object after converting into electrical signals, includes: a reference data storage unit 30 which stores a reference gray level data and a reference colorimetric data measured from an achromatic test pattern and a chromatic test pattern of a preset test pattern, respectively by accumulating the data in the database system; a correction coefficient calculating unit 40 which calculates a gray level correction coefficient matrix to reduce an error between a gray level scanning data obtained by scanning the achromatic test pattern 11 received through the photoelectric conversion unit 20 and the reference gray level data to the minimum, performs the linear transformation applying the gray level correction coefficient matrix to a colorimetric scanning data obtained by scanning the chromatic test pattern 12 through the photoelectric conversion unit 20, and calculates the colour correction coefficient matrix which reduces the error between the colorimetric scanning data and reference colorimetric data to the minimum according to a specified colour correction method; and a colour correction unit 50 which receives the gray level correction coefficient matrix and colour correction coefficient matrix from the correction coefficient calculating unit 40, performs the linear transformation applying the gray level correction coefficient matrix and applying the colour correction coefficient matrix to the output of the photoelectric conversion unit 20, and outputs the result after converting into a specified colour coordinate system.

Here, the reference data storage unit 30 includes a reference gray level data storage unit 32 which stores the reference gray level data measured through the optical densitometer from the achromatic test pattern 11 of the test pattern 10 by accumulating the data in the database system; and a reference colorimetric data storage unit 31 which stores the reference colorimetric data measured through the colorimeter from the chromatic test pattern 12 of the test pattern 10 by accumulating the data in the database system.

The correction coefficient calculating unit 40 includes a gray level correction coefficient calculating unit 42 which calculates the gray level correction coefficient matrix which reduces the error between the gray level scanning data and reference gray level data to the minimum by receiving the gray level scanning data obtained by scanning the achromatic test pattern 11 through the photoelectric conversion unit 20; and a colour correction coefficient calculating unit 41 which calculates a colour correction coefficient matrix which reduces an error between a gray level correction colorimetric data and reference colorimetric data to the minimum according to a specified colour correction method after forming the gray level correction colorimetric data through the linear transformation applying the gray level correction coefficient matrix to the colorimetric scanning data.

In addition, the colour correction unit 50 includes: a gray level correction processing unit 52 which receives the gray level correction coefficient matrix from the gray level correction coefficient calculating unit 42 and performs the linear transformation applying the gray level correction coefficient matrix to the output of the photoelectric conversion unit 20; and a colour correction processing unit 51 which performs the linear transformation applying the colour correction coefficient matrix to the output of the gray level correction processing unit 52, and outputs the result after converting into a specified colour coordinate system.

As described above, the test pattern 10 preferably includes the achromatic test pattern 11 on which the achromatic colour is divided equally at certain positions according to the optical density; and the chromatic test pattern 12 using a Macbeth colour rendition chart on which a plurality of chromatic colours are divided equally at other positions.

The specified colour correction method is one of either the linear transformation method, the polynomial transformation method or the 3-dimensional look-up table method. Preferably, the specified colour coordinate system is the XYZ colour coordinate system of the Commission International de l'Eclairage (CIE), which is a device-independent colour coordinate system.

The operation of this embodiment of the colour correction apparatus is on the assumption that the test pattern 10 includes the achromatic test pattern 11 comprising the achromatic colour and the chromatic test pattern 12 comprising the chromatic colours, and the reference gray level data which is the optical density value and the reference colorimetric data which is the tri-stimuli of the CIE-XYZ colour coordinate system each measured through the optical densitometer and the colorimeter from the achromatic test pattern 11 and chromatic test pattern 12 of the test pattern 10 are stored in the reference gray level data storage unit 32 and reference colorimetric data storage unit 31, respectively.

First, the photoelectric conversion unit 20 equipped with the charged couple device (CCD) as a photoelectric conversion element radiates the illuminating light having a certain light-emitting spectrum to the object. Afterwards, the photoelectric conversion unit 20 converts the spectral information about each of the RGB colours reflected from the object into the electrical signals and then outputs these signals.

Next, the gray level correction coefficient calculating unit 42 of the correction coefficient calculating unit 40 calculates the gray level correction coefficient matrix which reduces an error between the gray level scanning data and reference gray level data to the minimum after receiving the gray level scanning data obtained by scanning the achromatic test pattern 11 through the photoelectric conversion unit 20. Similarly, the colour correction coefficient calculating unit 41 of the correction coefficient calculating unit 40 calculates the colour correction coefficient matrix which reduces the error between a gray level correction colorimetric data and the reference colorimetric data to the minimum according to a specified colour correction method after forming the gray level correction colorimetric data by performing the linear transformation applying the gray level correction coefficient matrix to the colorimetric scanning data,

At this time, the colour correction method selects one of either the linear transformation method, the polynomial transformation method or the 3-dimensional look-up table method.

The reason for performing the gray level correction process through calculating the gray level correction coefficient matrix prior to calculating the colour correction coefficient matrix is to have the good reproduction characteristic of the achromatic colour in order to obtain the good colour reproduction characteristic. In addition, it is because a small variation in aspect of a colour balance influences the achromatic colour rather than the chromatic colour.

The conventional gray level correction is explained as follows. The gray level correction is to match the gray level reproduction characteristic with the visual characteristic of the human being. The aim of the gray level correction is to control the gradient between the optical density of the document image and optical density of the reproduction image to have the linearity on the having two axes of the optical density of the document and optical density of the reproduction image. This gradient is called a $\gamma$ curve or a gray level reproduction curve. In order to have the desirable gray level reproduction characteristic, it is necessary to perform a $\gamma$ correction which allows the linearity to the $\gamma$ curve. The $\gamma$ correction is the typical example of the gray level correction.

The gray level reproduction is to enhance the similarity between the optical density of each of the RGB colour signals of the document image and the optical density of the reproduction image. While the colour reproduction deals with the hue and saturation, the gray level deals with the image reproduction capacity of the luminance.

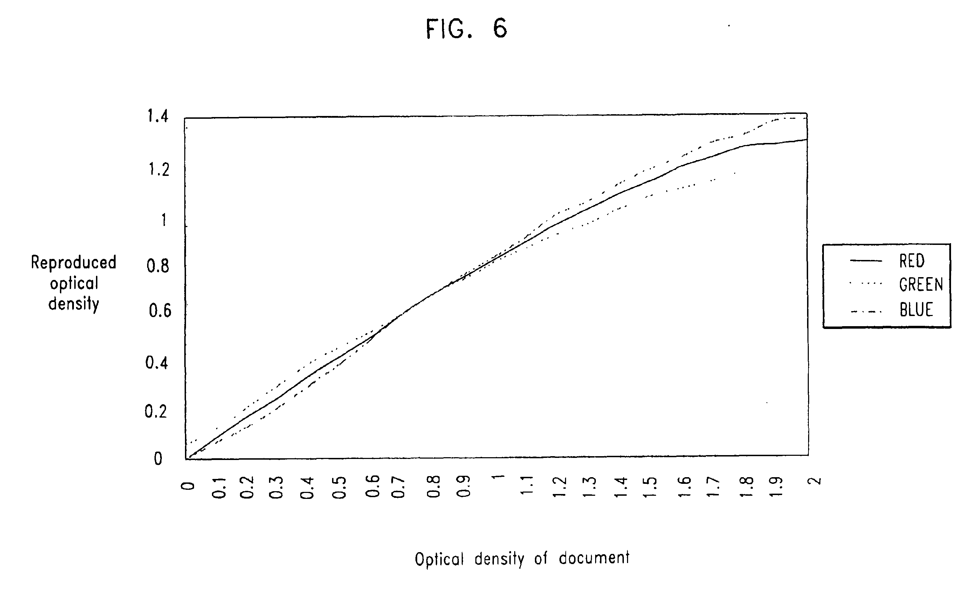

FIG. 6 is a graph illustrating the gray level characteristics of the conventional image system before performing the gray level correction. Referring to FIG. 6, the optical density of the reproduction image of the conventional colour image input unit is not matched with the optical density of the document, and there is the characteristic difference according to the RGB colour signals.

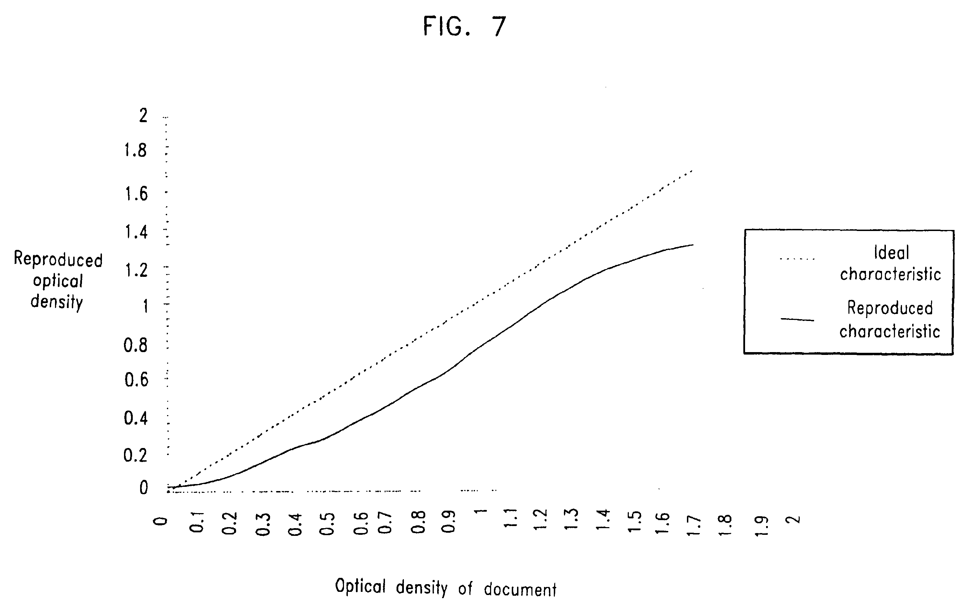

FIG. 7 is a graph illustrating an ideal gray level correction. The solid line indicates the gray level reproduction characteristic of the luminance signal combining the RGB signal of the conventional image system such as the scanner, and the dotted line indicates an ideal gray level reproduction characteristic, which shows the optical density of the document and the optical density of the reproduction image have the linearity. In other words, the ideal gray level correction is to match the gray level reproduction characteristic of the conventional image system indicated with the solid line with the ideal gray level reproduction characteristic indicated with the dotted line.

Here, the reason for setting the reference coordinate values of the horizontal axis and vertical axis with the optical density OD, the photoelectric conversion element such as CCD has the characteristic proportional to the reflectance, and the visual characteristic of the human being has the algebraical function characteristic to the reflectance. The relationship between the optical density OD and reflectance $\Gamma$ is explained in the following formula 8:

$$OD = [-\log\frac{1}{\Gamma}]$$

$$(8)$$

which means the human visual system is relatively insensitive to the variation of the light quantity of the bright light. On the contrary, the human visual system is relatively sensitive to the minute variation of the dark light.

The main factors in poor colour balance are the colour temperature of the illuminating light, the spectral sensitivity characteristic, the non-linear characteristic of an analogue/digital converter and amplifiers of each RGB channel, etc. Where appropriate actions are not taken, the colour reproduction characteristic of the achromatic document including shading elements becomes poor. In other words, the achromatic image has the chromatic elements in the reproduction image. This means the hue element has another value rather than 0 degrees in a colour ring.

Finally, the colour correction unit 50 receives the gray level correction coefficient matrix from the gray level correction coefficient calculating unit 42 through the gray level correction processing unit 52, performs the linear transformation applying the gray level correction coefficient matrix to the output of the photoelectric conversion unit 20, and then outputs the result. Afterwards, the colour correction unit 50 receives the output of the gray level correction processing unit 52 through the colour correction processing unit 51, performs the linear transformation applying the colour correction coefficient matrix to the output of the gray level correction processing unit 52, and then outputs the result by converting into the CIE-XYZ colour coordinate system (a device-independent colour coordinate system).

The correction coefficient calculating unit 40 preferably further includes a colour correction conversion matrix calculating unit (not illustrated) which calculates the colour correction conversion matrix through a matrix multiplication in the order of the gray level correction coefficient matrix and the colour correction coefficient matrix. The colour correction unit 50 has a benefit in processing speed when performing the linear transformation once applying the colour correction conversion matrix to the output of the photoelectric conversion unit 20, instead of performing the linear transformation using the gray level correction coefficient matrix to the output of the photoelectric conversion unit 20, and then successively performing the linear transformation applying the colour correction coefficient matrix.

The linear transformation performed twice can be substituted to perform once, and the results of these two cases are the same.

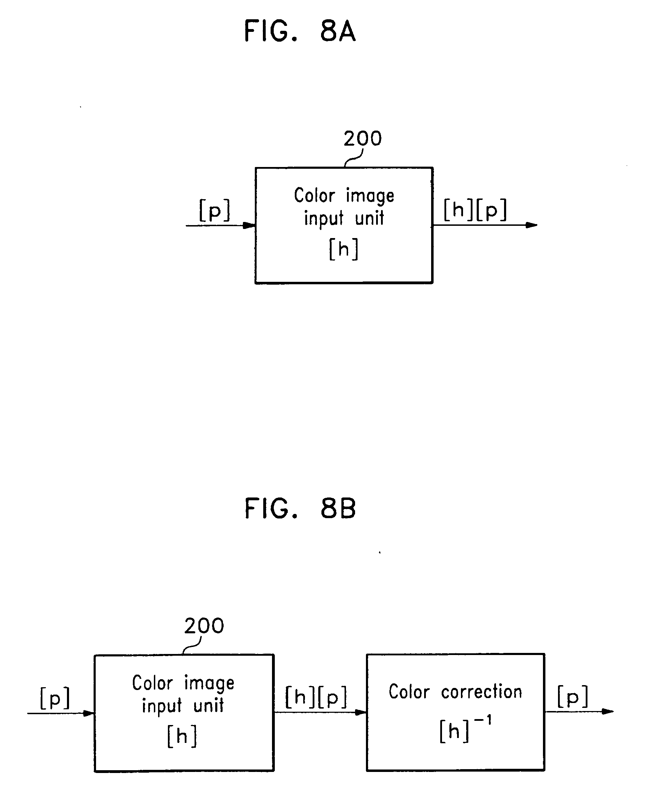

FIGs. 8A and 8B are conceptual views illustrating a preferred embodiment of the colour correction apparatus of according to the present invention. FIG. 8A is a block diagram illustrating a system model of the colour image input unit whose colour correction is not performed; and FIG. 8B is a block diagram illustrating a system model of the colour image input unit whose colour correction is performed.

As shown in FIG. 8A, assuming that the colour distortion characteristic of the colour image input unit 200 is indicated as a matrix [h], and the RGB signal of the input data is indicated as $[P]=[R\ G\ B]^T$, when the input data $[P]=[R\ G\ B]^T$ is applied to the colour image input unit 200, the output [S] of the colour image input unit 200 is indicated in the following equation: [S]=[h] [p]. Here, the $^T$ means a transpose matrix.

Assuming the colour correction conversion matrix which is applied to obtain the same output as the input data by removing the colour distortion characteristic is [M], the complete colour correction is performed when satisfying the following equation $[S_{cc}]=[M][h][P]=[P]$, as shown in FIG. 8B, wherein $[S_{cc}]$ is the output whose colour is corrected.

In other words, it means an ideal colour correction can be performed when the colour correction conversion matrix [M] becomes an inverse matrix $[h]^{-1}$ of the colour distortion matrix [h].

However, since there are many physical restrictions in calculating the accurate inverse matrix $[h]^{-1}$ of the colour distortion matrix [h] by analyzing the colour distortion characteristic, the essence of the colour correction process is to calculate the colour correction conversion matrix capable of optimally approaching to the inverse matrix $[h]^{-1}$ of the colour distortion matrix $[h]$ within the restriction.

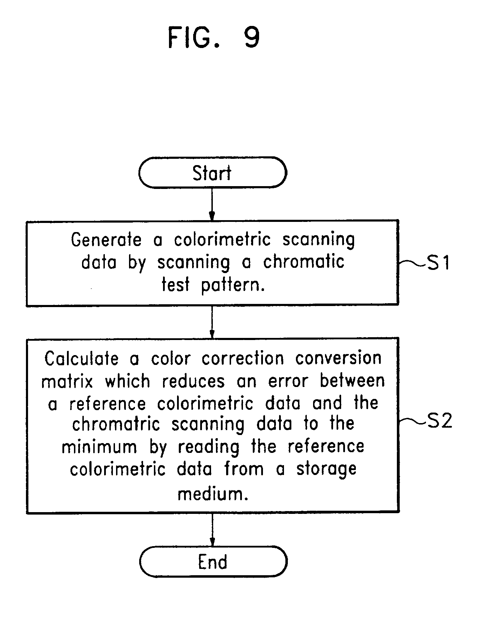

Below, a colour correction method is explained with reference to FIG. 9.

As shown in FIG. 9, the colour correction method of the image system which performs the colour correction process through the linear transformation applying the colour correction conversion matrix to the input data obtained by scanning the input target document includes the steps of: generating a colorimetric scanning data by scanning the chromatic test pattern 12 of the test pattern 10 (step 1); and calculating a colour correction conversion matrix which reduces an error between the reference colorimetric data and colorimetric scanning data to the minimum according to a specified colour correction method by reading the reference colorimetric data from the storage medium which stores the reference colorimetric data measured from the chromatic test pattern 12 (step 2).

Here, the chromatic test pattern 12 of the test pattern 10 is a pattern using a Macbeth colour rendition chart in which a plurality of chromatic colours are equally divided in other positions.

Moreover, the specified colour correction method is selected from one of the linear transformation method, the polynomial transformation method and the 3-dimensional look-up table method.

The performing process of the preferred embodiment of the colour correction method of the image system according to the present invention is explained, referring to FIGs. 4 to 9.

The performing process of the colour correction method is on the assumption that the test pattern 10 includes the chromatic test pattern 12 comprising the chromatic colours, and the reference gray level data which is the optical density value measured through the optical densitometer from the chromatic test pattern 12 of the test pattern 10 is stored in the reference colorimetric data storage unit 31.

First, after generating the colorimetric scanning data by scanning the chromatic test pattern 12 of the test pattern 10 through the photoelectric conversion unit 20 at step 1 of generating the scanning data, the colour correction conversion matrix which reduces the error between the reference colorimetric data and colorimetric scanning data to the minimum is calculated by reading the reference colorimetric data from the reference colorimetric data storage unit 31 through one of either the linear transformation method, the polynomial transformation method or the 3-dimensional look-up table method at step 2 of calculating the colour correction conversion matrix.

The actual colour correction process is performed through the linear transformation by applying the colour correction conversion matrix calculated at step 2 to the input data obtained by scanning the input target document.

At this time, after performing the linear transformation applying the gray level correction coefficient matrix to the output of the photoelectric conversion unit 20 and outputting the result, the output of the gray level correction processing unit 52 is received through the colour correction processing unit 51. After performing the linear transformation applying the colour correction coefficient matrix to the output of the gray level correction processing unit 52, the result is converted into the CIE-XYZ colour coordinate system (a device-independent colour coordinate system) and then output.

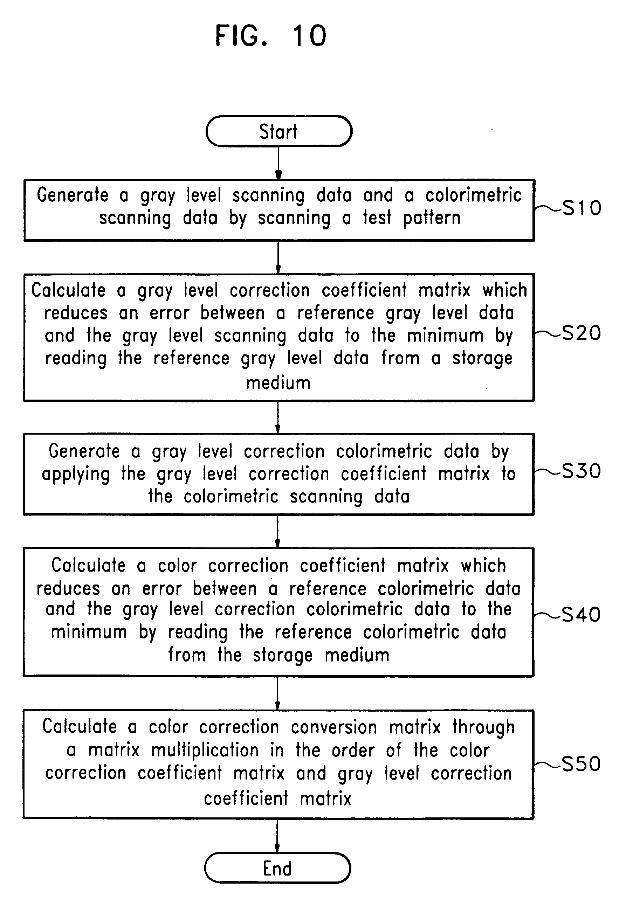

Hereinafter, a colour correction method according to an embodiment of the present invention is explained with reference to FIG. 10.

FIG. 10 is a flowchart illustrating a preferred embodiment of the colour correction method.

As shown in the Figure 10, the colour correction method of the image system which performs the colour correction process through the linear transformation applying the colour correction conversion matrix to the input data obtained by scanning the input target document includes the steps of: generating scanning data of a gray level scanning data and a colorimetric scanning data by scanning an achromatic test pattern 11 and a chromatic test pattern 12 of a preset test pattern 10, respectively (step 10) ; calculating a gray level correction coefficient matrix which reduces an error between the reference gray level data and the gray level scanning data to the minimum by reading the reference gray level data from the storage medium which stores the reference gray level data previously measured from the achromatic test pattern 11 (step 20); performing a gray level correction for acquiring a linearity of gray level characteristics regarding each colour by generating a gray level correction colorimetric data through the linear transformation applying the gray level correction coefficient matrix to the colorimetric scanning data (step 30) ; calculating a colour correction coefficient for calculating a correction coefficient matrix which reduces an error between a reference colorimetric data and the gray level correction colorimetric data to the minimum according to a specified colour correction method by reading the reference colorimetric data from the storage medium which stores the reference colorimetric data previously measured from the chromatic test pattern 12 (step 40) ; and calculating a colour correction conversion matrix through the matrix multiplication in the order of the colour correction coefficient matrix and the gray level correction coefficient matrix (step 50).

Here, the test pattern 10 includes the achromatic test pattern 11 in which the achromatic colour is equally divided in certain positions according to the optical density and the chromatic test pattern 12 which uses the Macbeth colour rendition chart in which a plurality of chromatic colours are equally divided in its other positions.

The specified colour correction method is preferably one method selected from the linear transformation method, the polynomial transformation method and the 3-dimensional look-up table method. The specified colour coordinate system is preferably the CIE-XYZ colour coordinate system (a device-independent colour coordinate system).

The performing process of the colour correction method of the image system according to the present invention is explained, referring to FIGs. 5 to 10.

At step 10, the gray level scanning data and colorimetric scanning data are generated by scanning the achromatic test pattern 11 and chromatic test pattern 12 of the test pattern 10 through the photoelectric conversion unit 20, respectively.

Next, at step 20, by reading the reference gray level data from the reference gray level data storage unit 32 which stores the reference gray level data previously measured from the achromatic test pattern 11, the gray level correction coefficient matrix which reduces the error between the reference gray level data and the gray level scanning data to the minimum is calculated. At step 30, the linearity of gray level characteristics of each colour is obtained by generating the gray level correction colorimetric data through the linear transformation applying the gray level correction coefficient matrix to the colorimetric scanning data.

At step 40, by reading the reference colorimetric data from the reference colorimetric data storage unit 31 which stores the reference colorimetric data previously measured from the chromatic test pattern 12, the colour correction coefficient matrix which reduces the error between the reference colorimetric data and the gray level correction colorimetric data to the minimum is calculated according to the specified colour correction method. Finally, at step 50, the colour correction conversion matrix is calculated by the matrix multiplication in the order of colour correction coefficient matrix and the gray level correction coefficient matrix through the colour correction conversion matrix calculating unit (not illustrated).

The actual colour correction process is performed through the linear transformation applying the colour correction conversion matrix calculated at step 50 to the input data obtained by scanning the input target document.

After performing the linear transformation applying the gray level correction coefficient matrix to the output of the photoelectric conversion unit 20 and outputting the result, the output of the gray level correction processing unit 52 is received through the colour correction processing unit 51. Similarly, after performing the linear transformation applying the colour correction coefficient matrix to the output of the gray level correction processing unit 52, the result is outputted after converting into the CIE-XYZ colour coordinate system (a device-independent colour coordinate system).

Here, the step 40 of calculating the colour correction coefficient is explained in detail. The step 40 is a process for obtaining the colour correction coefficient matrix by substituting the relation between the data obtained by scanning the chromatic test pattern 12 and the gray level correction colorimetric data into the aforesaid formula 5 or 6, under the condition that gray level correction of the image system according to RGB channels is actually completed through the process of calculating the gray level correction coefficient matrix, i.e., under the condition that the linearity of gray level characteristics of RGB colours of the image system is acquired.

For ease of understanding, assume that the reference colorimetric data which are the measuring values of the chromatic colours of the test pattern 10 are accumulated in the database system inside of the image system and then are $P_{Ri}$, $P_{Gi}$ and $P_{Bi}$, and the gray level correction colorimetric data generated through the linear transformation applying the gray level correction coefficient matrix to the colorimetric scanning data, i.e., the scanning values of each of the chromatic colours included in the chromatic test pattern 12 are $S_{Ri}$, $S_{Gi}$ and $S_{Bi}$. Here, $\underline{i}$ is an index value of each of the chromatic colour, which has the value of 1, 2, 3, ......n, where n indicates the total number of chromatic colours.

For ease of understanding, assuming that the specified colour correction method adopts the linear transformation method by the 3 x 3 matrix, the process of calculating the colour correction coefficient matrix is explained.

Assuming that estimated values whose colour is corrected by a proper colour correction filter as in the formula 5 are $\underline{P}_{Ri}$, $\underline{P}_{Gi}$ and $\underline{P}_{Bi}$, the colour correction coefficient matrix can be calculated by calculating a least mean square error (LMSE) of all the chromatic colours with a condition which reduces an error between the gray level correction colorimetric data $S_{Ri}$, $S_{Gi}$ and $S_{Bi}$ and the colour corrected estimated values $\underline{P}_{Ri}$, $\underline{P}_{Gi}$ and $\underline{P}_{bi}$ to the minimum.

In other words, the least mean square errors of the gray level correction colorimetric data $S_{Ri}$, $S_{Gi}$ and $S_{Bi}$ and the colour corrected estimated values $\underline{P}_{Ri}$, $\underline{P}_{Gi}$ and $\underline{P}_{bi}$ are indicated as in the following formula 9.

$$MIN\sum_i(\Delta R_i) = MIN\sum_i(P_{Ri} - \underline{P_{Ri}})^2 = MIN\sum_i\{P_{Ri} - (a_{11}S_R + a_{12}S_G - a_{13} + S_B)\}^2$$

$$MIN\sum_i(\Delta G_i) = MIN\sum_i(P_{Gi} - \underline{P_{Gi}})^2 = MIN\sum_i\{P_{Gi} - (a_{21}S_R + a_{22}S_G - a_{23} + S_B)\}^2$$

$$MIN\sum_i(\Delta B_i) = MIN\sum_i(P_{Bi} - \underline{P_{Bi}})^2 = MIN\sum_i\{P_{Bi} - (a_{31}S_R + a_{32}S_G - a_{33} + S_B)\}^2$$

$$(9)$$

In order to satisfy the formula 9, a necessary condition is indicated in the following formula 10.

$$\frac{\partial\sum_i(\Delta R_i)^2}{\partial a_{11}} = 0, \quad \frac{\partial\sum_i(\Delta R_i)^2}{\partial a_{12}} = 0, \quad \frac{\partial\sum_i(\Delta R_i)^2}{\partial a_{13}} = 0$$

$$\frac{\partial\sum_i(\Delta G_i)^2}{\partial a_{21}} = 0, \quad \frac{\partial\sum_i(\Delta G_i)^2}{\partial a_{22}} = 0, \quad \frac{\partial\sum_i(\Delta G_i)^2}{\partial a_{23}} = 0$$

$$\frac{\partial\sum_i(\Delta B_i)^2}{\partial a_{31}} = 0, \quad \frac{\partial\sum_i(\Delta B_i)^2}{\partial a_{32}} = 0, \quad \frac{\partial\sum_i(\Delta B_i)^2}{\partial a_{33}} = 0$$

$$(10)$$

Referring to the formula 10, the colour correction coefficient matrix is obtained as in the following formula 11:

$$\begin{bmatrix} a_{11} & a_{12} & a_{13} \\ a_{21} & a_{22} & a_{23} \\ a_{31} & a_{32} & a_{33} \end{bmatrix} = \begin{bmatrix} S_R P_R & S_G P_R & S_B P_R \\ S_R P_G & S_G P_G & S_B P_G \\ S_R P_B & S_G P_B & S_B P_B \end{bmatrix} \begin{bmatrix} S_R S_R & S_R S_R & S_R S_R \\ S_R S_G & S_G S_G & S_G S_B \\ S_R S_B & S_G S_B & S_B S_B \end{bmatrix}$$

$$S_K P_K = \sum_i(S_{ki} P_{ki}), \quad S_K S_K = \sum_i(S_{ki} S_{ki})$$

$$K = R, G, B, \quad i = 1, 2, 3, \dots\dots\dots\dots n$$

$$(11)$$

wherein i is the index of each of the chromatic colours and n is the total number of chromatic colours.

By repeatedly performing the process of the present invention which is performed in the order of steps 10, 20, 30, 40 and 50, more accurate colour correction conversion matrix is calculated, thereby maximizing the efficiency of the present invention.

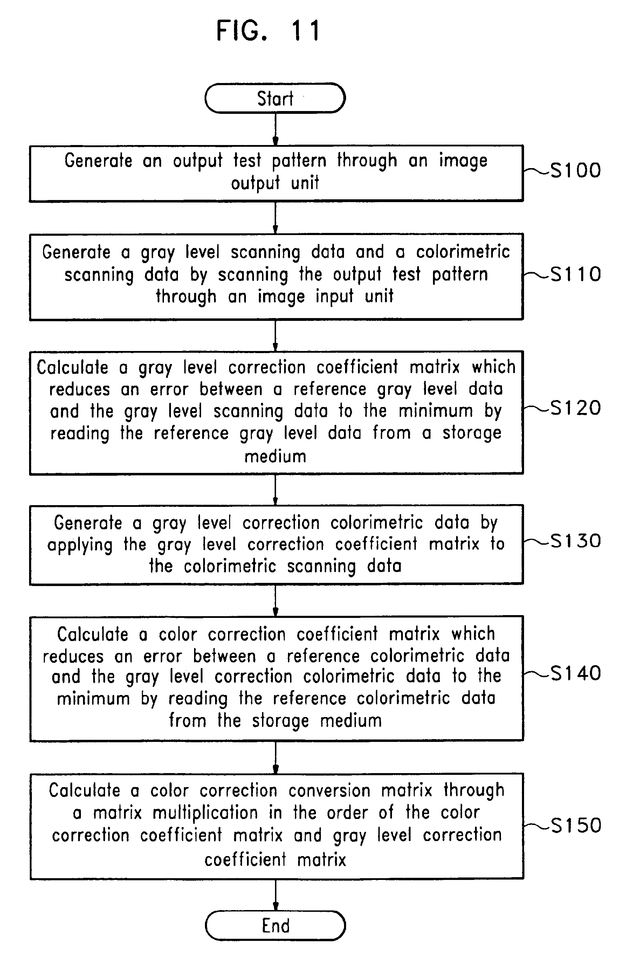

Hereinafter, another embodiment of the colour correction method of the present invention is explained with reference to FIG. 11.

As shown in Figure 11, the colour correction method of the image system which performs the colour correction process through the linear transformation, applying an colour correction conversion matrix to an input data obtained by scanning an input target document, includes the steps of: generating an output test pattern including an achromatic output pattern and a chromatic output pattern by reading a reference gray level data and a reference colorimetric data previously measured from the achromatic test pattern 11 and chromatic test pattern 12 of the preset test pattern 10 respectively and outputs the reference gray level data and reference colorimetric data through a colour image output unit (step 100); generating scanning data of a gray level scanning data and a colorimetric scanning data by scanning the achromatic output pattern and chromatic output pattern included in the output test pattern, respectively (step 110); calculating a gray level correction coefficient for calculating a gray level correction coefficient matrix which reduces an error between the reference gray level data and the gray level scanning data to the minimum by reading the reference gray level data from the storage medium which stores the reference gray level data (step 120); performing a gray level correction for acquiring a linearity of gray level characteristics regarding each colour by generating a gray level correction colorimetric data through the linear transformation applying the gray level correction coefficient matrix to the colorimetric scanning data (step 130); calculating a colour correction coefficient for calculating a colour correction coefficient matrix which reduces an error between the reference colorimetric data and the gray level correction colorimetric data to the minimum according to a specified colour correction method by reading the reference colorimetric data from the storage medium which stores the reference colorimetric data (step 140); and calculating a colour correction conversion matrix through the matrix multiplication in the order of the colour correction coefficient matrix and gray level correction coefficient matrix (step 150).

The test pattern 10 includes the achromatic test pattern 11 on which the achromatic colour is divided equally at certain positions according to the optical density; and the chromatic test pattern 12 using the Macbeth colour rendition chart on which a plurality of chromatic colours are divided equally at other positions.

The specified colour correction method is one of the linear transformation method, the polynomial transformation method or the 3-dimensional look-up table method.

Referring to FIGs. 11 to 12, the performing process of another embodiment of the colour correction method of the image system is explained.

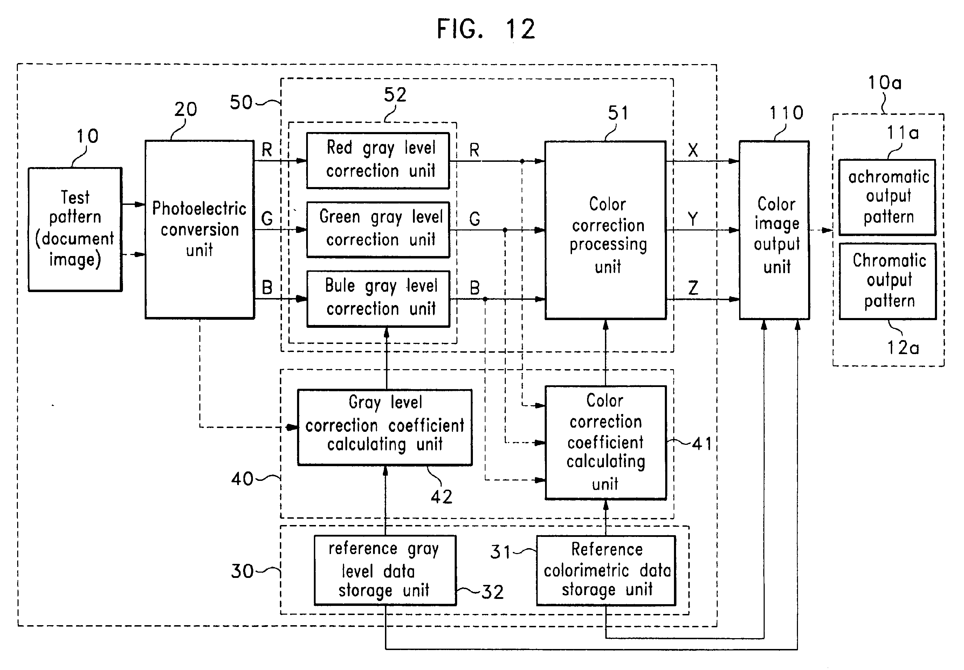

Prior to explaining the performing process of the colour correction method of the image system, another embodiment of the colour correction apparatus of the image system according to the present invention is explained with reference to FIG. 12.

FIG. 12 is a block diagram illustrating another embodiment of the colour correction apparatus of the image system, which shows the structure of an example combining the scanner, i.e., the typical colour image input unit and the printer, i.e., the typical colour image output unit.

The same reference numerals are allotted to the same component parts which perform similar functions to the embodiment of the colour correction apparatus of the image system shown in FIG. 5.

The colour correction apparatus of the image system including a photoelectric conversion unit 20 which radiates an illuminating light having a certain light emitting spectrum to an object and outputs the spectral information regarding the RGB colours reflected from the object after converting into electrical signals, includes: a reference data storage unit 30 which stores a reference gray level data and a reference colorimetric data measured from an achromatic test pattern 11 and a chromatic test pattern 12 of a preset test pattern 10, respectively by accumulating the data in the database system; a colour image output unit 110 which outputs an output test pattern 10a including an achromatic output pattern 11a and a chromatic output pattern 12a after reading the reference gray level and the reference colorimetric data from the reference data storage unit 30, respectively; a correction coefficient calculating unit 40 which calculates a gray level correction coefficient matrix which reduces an error between a gray level scanning data and the reference gray level data to the minimum by receiving the gray level scanning data obtained by scanning the achromatic output pattern 11a through the photoelectric conversion unit 20; and then calculates a colour correction coefficient matrix which reduces an error between a colorimetric scanning data and the reference scanning data to the minimum after performing the linear transformation applying the gray level correction coefficient matrix to the colorimetric scanning data obtained by scanning the chromatic output pattern 12a through the photoelectric conversion unit 20; and a colour correction unit 50 which performs the linear transformation applying the gray level correction coefficient matrix and the colour correction coefficient matrix to the output of the photoelectric conversion unit 20 after receiving the gray level correction coefficient matrix and colour correction coefficient matrix from the correction coefficient calculating unit 40, and then outputs the result after converting into a specified colour coordinate system.

Here, the reference data storage unit 30 includes a reference gray level data storage unit 32 which stores the reference gray level data measured through an optical densitometer from the achromatic test pattern 11 of the test pattern by accumulating the data in the database system; and a reference colorimetric data storage unit 31 which stores the reference colorimetric data measured through a colorimeter from the chromatic test pattern 12 of the test pattern 10 by accumulating the data in the database system.

In addition, the correction coefficient calculating unit 40 includes a gray level correction coefficient calculating unit 42 which calculates the gray level correction coefficient matrix which reduces the error between the gray level scanning data and reference gray level data to the minimum by receiving the gray level scanning data obtained by scanning the achromatic output pattern 11a through the photoelectric conversion unit 20; and a colour correction coefficient calculating unit 41 which calculates a colour correction coefficient matrix which reduces an error between a gray level correction colorimetric data and the reference colorimetric data to the minimum according to a specified colour correction method after forming the gray level correction colorimetric data by performing the linear transformation applying the gray level correction coefficient matrix to the colorimetric scanning data obtained by scanning the chromatic output pattern 12a.

The colour correction unit 50 includes a gray level correction processing unit 52 which receives the gray level correction coefficient matrix from the gray level correction coefficient calculating unit 42 and performs the linear transformation applying the gray level correction coefficient matrix to the output of the photoelectric conversion unit 20; and a colour correction processing unit 51 which performs the linear transformation applying the colour correction coefficient matrix to the output of the gray level correction processing unit 52, and outputs the result after converting into a specified colour coordinate system.

As described above, the test pattern 10 includes the achromatic test pattern 11 on which the achromatic colour is evenly divided at predetermined positions according to the optical density; and the chromatic test pattern 12 on which a plurality of chromatic colours are divided at other positions.

In addition, the specified colour correction method is one selected from the linear transformation method, the polynomial transformation method and the 3-dimensional look-up table method. Preferably, the specified colour coordinate system is XYZ colour coordinate system of the Commission International de l'Eclairage (CIE), which is one of the device-independent colour coordinate systems.

The performing process of another embodiment of the colour correction method according to the present invention is explained with reference to FIGs. 11 and 12.

First, at step 100, the output test pattern 10a including the achromatic output pattern 11a and chromatic output pattern 12a is generated each by reading the reference gray level data and reference colorimetric data from the reference data storage unit 30 through the colour image output unit 110. At step 110, the gray level scanning data and colorimetric scanning data are generated by scanning the achromatic output pattern 11a and chromatic output pattern 12a included in the output test pattern 10a, respectively, through the photoelectric conversion unit 20.

Afterwards, at step 120, by reading the reference gray level data from the reference gray level data storage unit 32 which stores the reference gray level data, the gray level correction coefficient calculating unit 42 calculates the gray level correction coefficient matrix which reduces an error between the reference gray level data and gray level scanning data to the minimum. At step 130, the gray level correction processing unit 52 obtains the linearity of gray level characteristics regarding each colour by generating the gray level correction colorimetric data through the linear transformation applying the gray level correction coefficient matrix to the colorimetric scanning data.

At step 140, the colour correction coefficient calculating unit 41 calculates the colour correction coefficient matrix which reduces an error between the reference colorimetric data and gray level correction colorimetric data to the minimum according to a specified colour correction method by reading the reference colorimetric data from the reference colorimetric data storage unit 31 which stores the reference colorimetric data. Afterwards, at step 150, the colour correction conversion matrix calculating unit (not illustrated) calculates the colour correction conversion matrix through the matrix multiplication in the order of the colour correction coefficient matrix and gray level correction coefficient matrix.

Here, the step 140 is explained in detail. It is a process of obtaining the colour correction coefficient matrix by substituting the relation between the data obtained by scanning the chromatic test pattern 12 and the gray level correction colorimetric data into the aforesaid formula 5 or 6, under the state that gray level correction of the image system according to RGB channels is actually completed through the process of calculating the gray level correction coefficient matrix, i.e., under the state that the linearity of gray level characteristics of RGB colours of the image system is acquired. Since the process of step 140 is similar to that of step 40, repeated explanation is omitted.

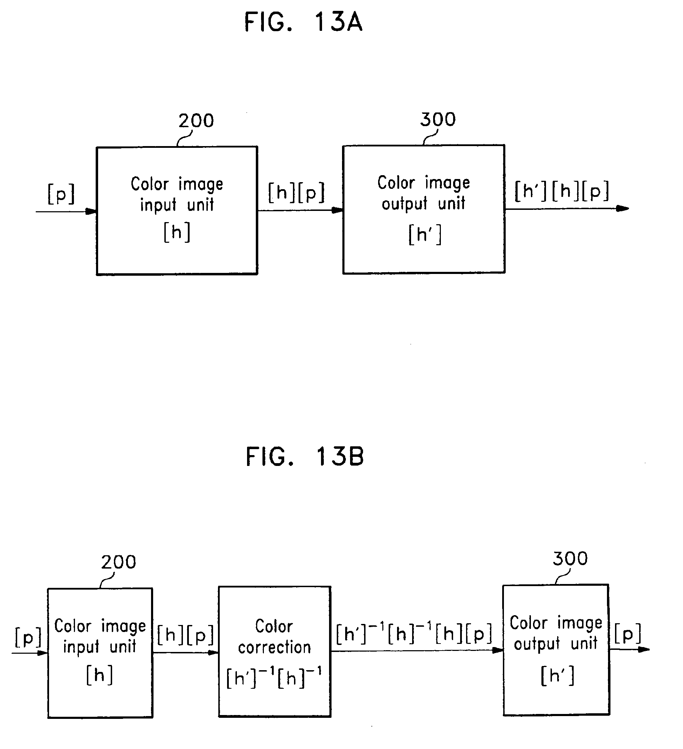

FIGs. 13A and 13B are conceptual views illustrating a preferred embodiment of the colour correction apparatus of the image system according to the present invention. FIG. 13A is a block diagram illustrating a system model which combines the colour image input unit and colour image output unit in which the colour correction is not performed; and FIG. 13B is a block diagram illustrating a system model which combines the colour image input unit and colour image output unit in which the colour correction is performed.

As shown in FIG. 13A, assuming that the colour distortion characteristics of the colour image input unit 200 and colour image output unit 110 are indicated as matrixes [h] and [h'], respectively, and the RGB signal of the input data is indicated as $[P]=[R\ G\ B]^T$, when the input data $[P]=[R\ G\ B]^T$ is applied to the colour image input unit 200, the output [S] of the colour image input unit 200 is indicated in the equation of $[S]=[h]\ [p]$, and the output [S'] of the colour image output unit 110 is indicated in the equation of [S']=[h'] [h] [P]. Here, the $^T$ means a transpose matrix.

Assuming the colour correction conversion matrix which is applied to obtain the same output as the input data by removing the colour distortion characteristic is [M], the complete colour correction is performed when satisfying the following equation [S'$_{cc}$]=[M] [h] [h'] [P]=[P], as shown in FIG. 13B, wherein [S'$_{cc}$] is the output whose colour is corrected.

In other words, this means an ideal colour correction can be performed when the colour correction conversion matrix [M] becomes an inverse matrix [h']$^{-1}$[h]$^{-1}$ of the colour distortion matrix of the colour image input unit 200 and colour image output unit 110.

However, since there are many physical restrictions in calculating the accurate inverse matrix [h']$^{-1}$[h]$^{-1}$ of the colour distortion matrix by accurately analyzing the colour distortion characteristic, the essence of the colour correction process is to calculate the colour correction conversion matrix [M] capable of optimally approaching to the inverse matrix [h']$^{-1}$[h]$^{-1}$ of the colour distortion matrix of the colour image input unit 200 and colour image output unit 110 within the restriction.

In the embodiment of the colour correction apparatus of the image system according to the present invention, the colour image output unit 110 generates the output test pattern by reading the reference gray level data and reference colorimetric data from the reference data storage unit 30. Here, it is also possible to generate the output test pattern by locating a storage medium in the colour image output unit 110 for performing function similar to the reference data storage unit 30.

As described above, the colour correction apparatus of the image system according to the preferred embodiment of the present invention lessens a burden in managing and keeping the test pattern. In addition, more accurate colour correction process can be performed by repeatedly performing the operation of applying the colour-corrected output test pattern outputted from the colour image output unit 110 to the colour image input unit 200 after performing the colour correcting once.

In other words, by repeatedly performing the process of the present invention which is performed in the order of steps 110, 120, 130, 140 and 150, more accurate colour correction conversion matrix is calculated, thereby maximizing the efficiency of the present invention.

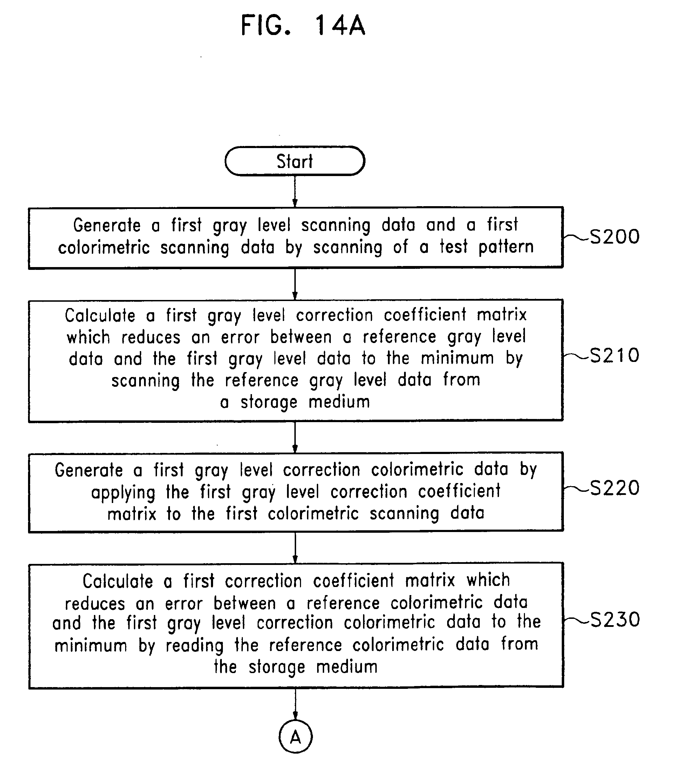

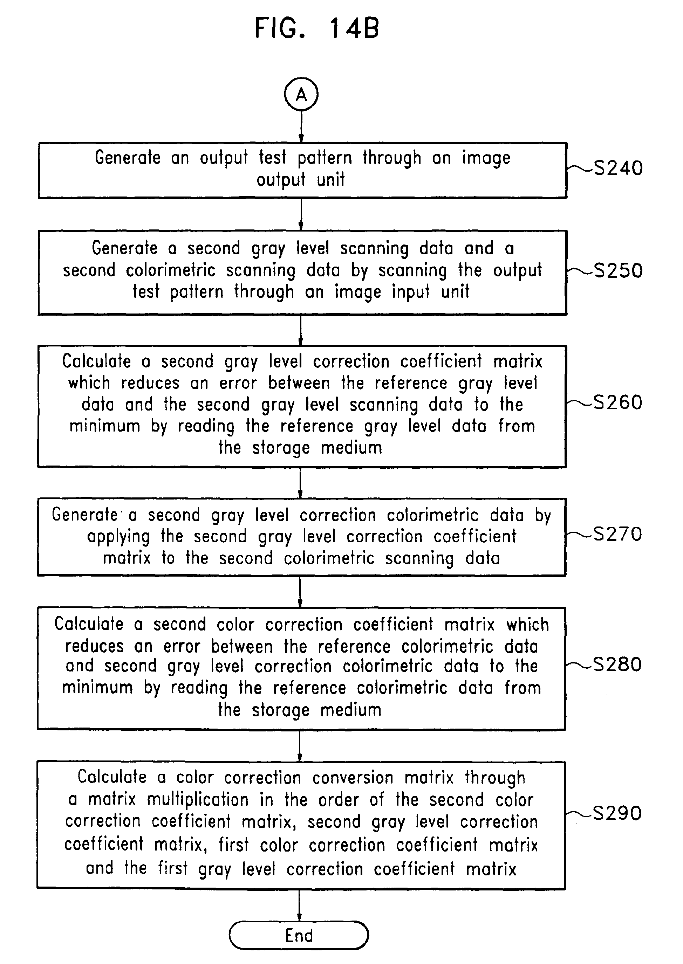

Hereinafter, another embodiment of the colour correction method of the image system is explained with reference to FIGs. 14A and 14B.

As shown in Figures 14A and 14B, the colour correction method of the image system which performs the colour correction process through the linear transformation applying a colour correction conversion matrix to input data obtained by scanning an input target document includes the steps of: generating first scanning data of a first gray level scanning data and a first colorimetric scanning data by scanning an achromatic test pattern 11 and a chromatic test pattern 12 of a test pattern 10 (step 200); calculating a first gray level correction coefficient for calculating a first gray level correction coefficient matrix which reduces an error between a reference gray level data and the first gray level data to the minimum by scanning the reference gray level data from a storage medium which stores the reference gray level data previously measured from the achromatic test pattern 11 (step 210); performing a first gray level correction for acquiring the linearity of gray level characteristics regarding each colour by generating a first gray level correction colorimetric data through the linear transformation applying the first gray level correction coefficient matrix to the first colorimetric scanning data (step 220); calculating a first correction coefficient for calculating a first colour correction coefficient matrix which reduces an error between a reference colorimetric data and the first gray level correction colorimetric data to the minimum according to a specified colour correction method by reading the reference colorimetric data from the storage medium which stores the reference colorimetric data previously measured from the chromatic test pattern 12 (step 230); generating an output test pattern including an achromatic output pattern and a chromatic output pattern by outputting a first colour correction data generated through the linear transformation applying the first colour correction coefficient matrix to the first gray level correction data through the colour image output unit (step 240); generating second scanning data of a second gray level scanning data and a second colorimetric scanning data by scanning the achromatic output pattern and chromatic output pattern included in the output test pattern, respectively (step 250); calculating a second gray level correction coefficient for calculating a second gray level correction coefficient matrix which reduces an error between the reference gray level data and the second gray level scanning data to the minimum by reading the reference gray level data from the storage medium which stores the reference gray level data (step 260); performing a second gray level correction for acquiring the linearity of gray level characteristics regarding each colour by generating a second gray level correction colorimetric data through the linear transformation applying the second gray level correction coefficient matrix to the second colorimetric scanning data (step 270); calculating a second colour correction coefficient for calculating a second colour correction coefficient matrix which reduces an error between the reference colorimetric data and second gray level correction colorimetric data according to the specified colour correction method by reading the reference colorimetric data from the storage medium which stores the reference colorimetric data (step 280); and calculating a colour correction conversion matrix through the matrix multiplication in the order of the second colour correction coefficient matrix, second gray level correction coefficient matrix, first colour correction coefficient matrix and the first gray level correction coefficient matrix (step 290).

Here, the test pattern 10 includes the achromatic test pattern 11 in which the achromatic colour is equally divided in certain positions according to the optical density and the chromatic test pattern 12 which uses the Macbeth colour rendition chart in which a plurality of chromatic colours are equally divided in its other positions.

The specified colour correction method is preferably one of the linear transformation method, the polynomial transformation method and the 3-dimensional look-up table method.

Another embodiment of the colour correction method of the image system according to the present invention is explained with reference to FIGs. 12 to 14.

First, at step 200, the first gray level scanning data and first colorimetric scanning data are formed by scanning the achromatic test pattern 11 and chromatic test pattern 12 of the test pattern 11, respectively through the photoelectric conversion unit 20. Afterwards, at step 210, the gray level correction coefficient calculating unit 42 calculates the first gray level correction coefficient matrix which reduces an error between the reference gray level data and first gray level scanning data to the minimum by reading the reference gray level data from the reference gray level data storage unit 32a which stores the reference gray level data previously measured from the achromatic test pattern 11. At step 220, the linearity of gray level characteristics regarding each colour is acquired by generating the first gray level correction colorimetric data through the linear transformation applying the first gray level correction coefficient matrix to the first colorimetric scanning data. To obtain the linearity of gray level characteristics is to obtain the linearity with the human visual characteristic by removing the gray level distortion characteristic which is generated by the colour image input unit.

Afterwards, at step 230, the first colour correction coefficient matrix is calculated, which reduces an error between the reference colorimetric data and the first gray level correction colorimetric data to the minimum by reading the reference colorimetric data from the reference colorimetric data storage unit 31 which stores the reference colorimetric data previously measured from the chromatic test pattern 12.

At step 240, the output test pattern 10a including the achromatic output pattern 11a and the chromatic output pattern 12a is formed by reading the reference gray level data and reference colorimetric data from the reference data storage unit 31, respectively, through the colour image output unit 110. At step 250, the second gray scanning data and second colorimetric scanning data are generated by scanning the achromatic output pattern 11a and chromatic output pattern 12a of the output test pattern 10a, respectively, through the photoelectric conversion unit 20.

Afterwards, at step 260, the gray level correction coefficient calculating unit 32 calculates the second gray level correction coefficient matrix which reduces an error between the reference gray level data and second gray level scanning data to the minimum by reading the reference gray level data from the reference gray level data storage unit 32 which stores the reference gray level data. At step 270, the linearity of gray level characteristics regarding the each colour is acquired by generating the second gray level correction colorimetric data through the linear transformation applying the second gray level correction coefficient matrix to the second colorimetric scanning data. Here, to obtain the linearity of gray level characteristics is to obtain the linearity with the human visual characteristic by removing the gray level distortion characteristic which is generated by the colour image output unit.

At step 280, the colour correction coefficient calculating unit 33 calculates the second colour correction coefficient matrix which reduces an error between the reference colorimetric data and second gray level correction colorimetric data to the minimum according to the specified colour correction method by reading the reference colorimetric data from the reference colorimetric data storage unit 31 which stores the reference colorimetric data. Afterwards, at step 29, the colour correction conversion matrix calculating unit (not illustrated) calculates the colour correction conversion matrix through the matrix multiplication in the order of the second colour correction coefficient matrix, second gray level correction coefficient matrix, first colour correction coefficient matrix and the first gray level correction coefficient matrix.

Here, the steps 230 and 280 of calculating the first and second coefficients, respectively, are explained in detail. Each of the steps is a process of obtaining the colour correction coefficient matrix by substituting the relation between the data obtained by scanning the chromatic test pattern 12 and the gray level correction colorimetric data into the aforesaid formula 5 or 6, under the condition that gray level correction of the image system according to RGB channels is actually completed through the process of calculating the gray level correction coefficient matrix, i.e., under the condition that the linearity of gray level characteristics of RGB colours of the image system is acquired. Since the process of steps 230 and 280 is similar to that of step 140, repeated explanation is omitted.

Referring to FIGs. 13A and 13B, the entire concept of another embodiment of the colour correction apparatus according to the present invention is explained in more detail.

According to another embodiment of the colour correction apparatus of the image system, in the case where the output test pattern output through the colour image output unit 110 is scanned through the colour image input unit 200, a feedback loop regarding the input/output is formed. Accordingly, after performing the colour correction once, more accurate colour correction processing can be performed by repeating the operation of applying the colour-corrected output test pattern outputted from the colour image output unit 110 to the colour image input unit 200 again.

By repeatedly performing the process of the present invention which is performed in the order of steps 200, 210, 220, 230, 240, 250, 260, 270, 280 and 290, a more accurate colour correction conversion matrix is calculated, thereby maximizing the efficiency of the present invention.

In the above preferred embodiments of the present invention, it is preferable to perform the device-independent colour correction by outputting the output obtained by performing the colour correction process regarding the output of the photoelectric conversion unit 20 after converting into the CIE-XYZ colour coordinate system. Preferably, the colour image output unit receives the results and then outputs them after converting into CMYK colour coordinate system.

When the image input unit is used singly or both the colour image input unit and colour image output unit are used, various situations can be encountered according to the settlement of the operating type. In addition, other new units rather than the colour image input unit and colour image output unit can be added. The colour distortion characteristic generated by the added devices can be removed easily in the colour correction process according to the present invention.

In the present invention, units for performing the input/output are explained as examples. It is also possible to use other colour image input/output units and colour processing unit, i.e., a monitor, printer, communication unit and a camera are easily applied to the present invention.

As described above, according to the colour correction apparatus and method of the image system according to the present invention, in order to perform the colour correction process regardless of the spectrum characteristic of the spectral optical system, age-based variation and individual variation of the light quantity, the gray level correction which linearizes the output of the image sensor according to the 3-wavelength bandwidth. Afterwards, the reference colorimetric data previously measured from the test pattern for measuring the colour correction is stored in the storage medium, and the colour correction process is performed so that the error between the scanning data obtained by scanning the measuring test pattern and the reference colorimetric data can be the minimum. Accordingly, the colour correction can be performed without using the optical densitometer or the colorimeter, and the operation for correcting the colour can be performed without knowledge of the colour coordinate system or colour signal.

In the embodiment where the input/output feedback loop is formed in the present invention, it is unnecessary to perform a separate external operation for calculating the colour correction coefficient. Since the operation process is also performed inside the image system, it is possible to realize the image system having the colour correction performance which is easy and efficient.

While the colour correction is performed at any time in the related arts to adaptively process the age-based variation of the image caused by the variation of the operation condition or environment, the colour correction according to the present invention is performed by only scanning the prescribed test pattern through the colour image input unit.

In addition, since device-independent colour correction can be performed, the efficiency is maximized when the image systems are connected mutually through communication networks.

While there have been illustrated and described what are considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

**Claims**

1. A colour correction apparatus (100) for an image system including a photoelectric conversion unit (20) which radiates an illuminating light having a certain light emitting spectrum to an object and outputs spectral information regarding each of RGB colours of reflected from said object after converting the information into electrical signals, said apparatus comprising:

      first reference data storage means (30) for storing reference gray level data and reference colorimetric data measured from an achromatic test pattern and a chromatic test pattern, respectively, of a preset test pattern (10) by accumulating the data in a database system;
      correction coefficient calculating means (40) for calculating a grey level correction coefficient matrix which reduces an error between a grey level scanning data obtained by scanning the achromatic test pattern through said photoelectric conversion unit (20) and the reference grey level data to a minimum, performs a linear transformation applying the grey level correction coefficient matrix to a colorimetric scanning data obtained by scanning said chromatic test pattern through said photoelectric conversion unit (20), wherein the correction coefficient calculating means calculates a colour correction coefficient matrix which reduces an error between the colorimetric scanning data and said reference colorimetric data to a minimum after receiving said colorimetric scanning data; and
      colour correction means (50) for receiving said colour correction coefficient matrix from said correction coefficient calculating means (40) and for performing a linear transformation applying said colour correction coefficient matrix to an output of said photoelectric conversion unit (20) and then outputting a result after converting into a certain colour coordinate system;

wherein an achromatic color is divided equally on said achromatic test pattern at certain positions according to optical density, and wherein said chromatic test pattern uses a Macbeth color rendition chart on which a plurality of chromatic colors are divided equally at other positions.

2. The apparatus of Claim 1, wherein said correction coefficient calculating means further comprises a gray level correction coefficient calculating unit (42) for calculating the gray level correction coefficient matrix which reduces the error between the gray level scanning data and the reference gray level data to a minimum after receiving said gray level scanning data obtained by scanning said achromatic test pattern through said photoelectric conversion unit (20), said colour correction means (50) further comprising a gray level correction processing unit (52) which receives said gray level correction coefficient matrix from said gray level correction coefficient calculating unit (42), performs the linear transformation applying said gray level correction coefficient matrix to the output of said photoelectric conversion unit (20), and then applies the output to the colour correction processing means (50).

3. The apparatus of Claim 2, wherein said correction coefficient calculating means (40) further comprises:

a colour correction conversion matrix calculating unit which calculates a colour correction conversion matrix through a matrix multiplication in an order of said gray level correction coefficient matrix and said colour correction coefficient matrix; and

a color correction unit which performs the linear transformation applying said color correction conversion matrix to the output of said photoelectric conversion unit, and then outputs the output of said photoelectric conversion unit after converting into a certain color coordinate system.

4. The apparatus of Claim 1, further comprising colour image output means (110) for reading said reference gray level data and reference colorimetric data from said first reference data storage means (30), and for outputting an output test pattern (10a) including an achromatic output pattern (11a) and a chromatic output pattern (12a).

5. The apparatus of Claim 1, further comprising a reference data storage unit and color image output means (110) for reading said reference gray level data and reference colorimetric data from said reference data storage unit after locating said reference data storage unit which is a storage medium similar to said reference data storage means, and wherein said image output means outputs an output test pattern including an achromatic output pattern and a chromatic output pattern.

6. The apparatus of Claim 1, wherein said reference data storage means (30) comprises:

a reference gray level data storage unit (32) which stores said reference gray level data measured through an optical densitometer from said achromatic test pattern by accumulating the reference gray level data in the database system; and

a reference colorimetric data storage unit(31) which stores said reference colorimetric data measured through a colorimeter from said chromatic test pattern by accumulating the reference colourimetric data in the database system.

7. The apparatus of Claim 1, wherein said correction coefficient calculation means employs a certain colour correction method which is one of a linear transformation method, a polynomial transformation method and a 3-dimensional look-up table method.

8. The apparatus of Claim 1, wherein said certain colour coordinate system is an XYZ colour coordinate system of the Commission International de l'Eclairage (CIE).

9. A colour correction method of an image system which performs a colour correction process through a linear transformation applying a colour correction conversion matrix to an input data obtained by scanning an input target document, said method comprising the steps of:

generating first scanning data of a first gray level scanning data and a first colorimetric scanning data by scanning an achromatic test pattern and a chromatic test pattern, respectively of a preset test pattern (10); calculating a first gray level correction coefficient for calculating a first gray level correction coefficient matrix which reduces an error between a reference gray level data (32) and said first gray level scanning data to a minimum by reading said reference gray level data from a storage medium (30) which stores said reference gray level data previously measured from said achromatic test pattern;

performing a first gray level correction for acquiring a linearity of gray level characteristics regarding each of a plurality of colours by generating first gray level correction colorimetric data through a linear transformation applying said first gray level correction coefficient matrix to said first colorimetric scanning data;

calculating a first colour correction coefficient for calculating a first correction coefficient matrix which reduces an error between a reference colorimetric data (31) and said first gray level correction colorimetric data to a minimum according to a certain colour correction method by reading said reference colorimetric data from the storage medium (30) which stores said reference colorimetric data previously measured from said chromatic test pattern; and

calculating a first colour correction conversion matrix through a matrix multiplication in the order of said first gray level correction coefficient matrix and first colour correction coefficient matrix, and setting said first colour correction conversion matrix as said colour correction conversion matrix;

wherein, on said achromatic test pattern, an achromatic color is divided equally at certain positions according to optical density; and

wherein said chromatic test pattern uses a Macbeth color rendition chart on which a plurality of chromatic colors is divided equally at other positions.

10. The method of Claim 9, further comprising the steps of:

generating an output test pattern including an achromatic output pattern and a chromatic output pattern by outputting a first colour correction data generated by the linear transformation applying said first colour correction conversion matrix to said first gray level scanning data and first colorimetric scanning data through a colour image output unit;

generating second scanning data of a second gray level scanning data and a second colorimetric scanning data by scanning said achromatic output pattern and chromatic output pattern, respectively, included in said output test pattern;

calculating a second gray level correction coefficient for calculating a second gray level correction coefficient matrix which reduces an error between said reference gray level data and second gray level scanning data to a minimum by reading said reference gray level data from the storage medium which stores said reference gray level data;

performing a second gray level correction for acquiring the linearity of gray level characteristics regarding each colour by generating second gray level correction colorimetric data through the linear transformation applying said second gray level correction coefficient matrix to said second colorimetric scanning data;

calculating a second colour correction coefficient for calculating a second colour correction coefficient matrix which reduces an error between said reference colorimetric data (31) and second gray level correction colorimetric data to a minimum according to a certain colour correction method by reading said reference colorimetric data from the storage medium (30) which stores said reference colorimetric data; and

calculating a second colour correction conversion matrix through the matrix multiplication in the order of said second colour correction coefficient matrix, said second gray level correction coefficient matrix and said first colour correction conversion matrix, and setting said second colour correction conversion matrix as said colour correction conversion matrix.

11. The method of Claim 9 or 10, wherein said certain colour correction method is one of a linear transformation method, a polynomial transformation method and a 3-dimensional look-up table method.

12. The method of Claim 10, wherein the data colour-corrected through the linear transformation applying said colour correction conversion matrix to said input data are outputted after converting into an XYZ colour coordinate system of the Commission International de l'Eclairage (CIE).

**Patentansprüche**

1. Farbkorrekturvorrichtung (100) für ein Bildsystem mit einer photoelektrischen Wandlereinheit (20), die ein Beleuchtungslicht mit einem bestimmten Licht emittierenden Spektrum auf ein Objekt ausstrahlt und spektrale Informationen in Bezug auf jede der RGB-Farben, die von dem genannten Objekt reflektiert werden, ausgibt, nachdem die Informationen in elektrische Signale umgewandelt worden sind, wobei die genannte Vorrichtung folgendes umfasst:

eine erste Referenzdatenspeichereinrichtung (30) zum Speichern von ReferenzGraustufendaten und kolorimetrischen Referenzdaten, die entsprechend aus einem achromatischen Testbild bzw. einem chromatischen Testbild eines vorher festgelegten Testbilds (10) gemessen werden, indem die Daten in einem Datenbanksystem akkumuliert werden;

eine Korrekturkoeffizientenberechnungseinrichtung (40) zum Berechnen einer Graustufenkorrekturkoeffizientenmatrix, die einen Fehler zwischen Graustufenabtastdaten, die durch Abtasten des achromatischen Testbilds durch die genannte photoelektrische Wandlereinheit (20) erhalten werden, und den Referenzgraustufendaten auf Minimum reduziert, die eine lineare Transformation ausführt unter Anwendung der Graustufenkorrekturkoeffizientenmatrix auf kolorimetrische Abtastdaten, die durch Abtasten des genannten chromatischen Testbilds durch die genannte photoelektrische Wandlereinheit (20) erhalten werden, wobei die Korrekturkoeffizientenberechnungseinrichtung eine Farbkorrekturkoeffizientenmatrix berechnet, die einen Fehler zwischen den kolorimetrischen Abtastdaten und den genannten kolorimetrischen Referenzdaten nach dem Empfang der genannten kolorimetrischen Abtastdaten auf ein Minimum reduziert; und

eine Farbkorrektureinrichtung (50) zum Empfangen der genannten Farbkorrekturkoeffizientenmatrix von der genannten Korrekturkoeffizientenberechnungseinrichtung (40) und zum Ausführen einer linearen Transformation, welche die genannte Farbkorrekturkoeffizientenmatrix auf eine Ausgabe der genannten photoelektrischen Wandlereinheit (20) anwendet und danach nach der Konvertierung in ein bestimmtes Farbkoordinatensystem ein Ergebnis ausgibt;

wobei eine achromatische Farbe auf dem genannten achromatischen Testbild an bestimmten Positionen gemäß der optischen Dichte in gleichen Teilen verteilt ist, und wobei das genannte chromatische Testbild ein Macbeth-Farbwiedergabediagramm verwendet, auf dem eine Mehrzahl chromatischer Farben an anderen Positionen in gleichen Teilen verteilt ist.

2. Vorrichtung nach Anspruch 1, wobei die genannte Korrekturkoeffizientenberechnungseinrichtung ferner eine Graustufenkorrekturkoeffizienten-Berechnungseinrichtung (42) zum Berechnen der Graustufenkorrekturkoeffizientenmatrix umfasst, welche den Fehler zwischen den Graustufenabtastdaten und den Referenzgraustufendaten auf ein Minimum reduziert nach dem Empfang der genannten Graustufenabtastdaten, die durch Abtasten des genannten achromatischen Testbilds durch die genannte photoelektrische Wandlereinheit (20) erhalten werden, wobei die genannte Farbkorrektureinrichtung (50) ferner eine Graustufenkorrekturverarbeitungseinheit (52) umfasst, welche die genannte Graustufenkorrekturkoeffizientenmatrix von der genannten Graustufenkorrekturkoeffizienten-Berechnungseinrichtung (42) empfängt, wobei sie die lineare Transformation ausführt, wobei die genannte Graustufenkorrekturkoeffizientenmatrix auf die Ausgabe der genannten photoelektrischen Wandlereinheit (20) angewendet wird, und wobei die Ausgabe danach auf die Farbkorrekturverarbeitungseinrichtung (50) angewendet wird.

3. Vorrichtung nach Anspruch 2, wobei die genannte Korrekturkoeffizientenberechnungseinrichtung (40) ferner folgendes umfasst:

eine Farbkorrekturumwandlungsmatrix-Berechnungseinheit, welche eine Farbkorrekturumwandlungsmatrix durch Matrixmultiplikation in einer Anordnung der genannten Graustufenkorrekturkoeffizientenmatrix und der genannten Farbkorrekturkoeffizientenmatrix berechnet; und
eine Farbkorrektureinheit, welche die lineare Transformation ausführt, die die genannte Farbkorrekturumwandlungsmatrix auf die Ausgabe der genannten photoelektrischen Wandlereinheit anwendet und danach die Ausgabe der genannten photoelektrischen Wandlereinheit ausgibt, nach der Umwandlung in ein bestimmtes Farbkoordinatensystem.

4. Vorrichtung nach Anspruch 1, wobei diese ferner eine Farbbildausgabeeinrichtung (110) zum Lesen der genannten Referenzgraustufendaten und kolorimetrischen Referenzdaten aus der genannten ersten Referenzdatenspeichereinrichtung (30) umfasst und zum Ausgeben eines Ausgabetestbilds (10a), das ein achromatisches Ausgabebild (11a) und ein chromatisches Ausgabebild (12a) aufweist.

5. Vorrichtung nach Anspruch 1, wobei diese ferner eine Referenzdatenspeichereinheit und eine Farbbildausgabeeinrichtung (110) zum Lesen der genannten Referenzgraustufendaten und kolorimetrischen Referenzdaten aus der genannten Referenzdatenspeichereinheit umfasst, bei der es sich um ein der genannten Referenzdatenspeichereinrichtung ähnliches Speichermedium handelt, und wobei die genannte Bildausgabeeinrichtung ein Ausgabetestbild ausgibt, das ein achromatisches Ausgabebild und ein chromatisches Ausgabebild aufweist.

6. Vorrichtung nach Anspruch 1, wobei die genannte Referenzdatenspeichereinrichtung (30) folgendes umfasst:

eine Referenzgraustufendatenspeichereinheit (32), welche die genannten Referenzgraustufendaten speichert, die durch einen optischen Dichtemesser aus dem genannten achromatischen Testbild gemessen werden, indem die Referenzgraustufendaten in dem Datenbanksystem akkumuliert werden; und

eine kolorimetrische Referenzdatenspeichereinheit (31), welche die genannten kolorimetrischen Referenzdaten speichert, die durch ein Kolorimeter aus dem genannten chromatischen Testbild gemessen werden, indem die kolorimetrischen Referenzdaten in dem Datenbanksystem akkumuliert werden.

7. Vorrichtung nach Anspruch 1, wobei die genannte Korrekturkoeffizientenberechnungseinrichtung ein bestimmtes Farbkorrekturverfahren einsetzt, bei dem es sich um ein lineares Transformationsverfahren, ein polynomisches Transformationsverfahren oder ein dreidimensionales Verweistabellenverfahren handelt.

8. Vorrichtung nach Anspruch 1, wobei es sich bei dem genannten bestimmten Farbkoordinatensystem um ein XYZ-Farbkoordinatensystem der Commission International de l'Eclairage (CIE) handelt.

9. Farbkorrekturverfahren eines Bildsystems, das einen Farbkorrekturprozess durch eine lineare Transformation ausführt, wobei eine Farbkorrekturumwandlungsmatrix auf Eingabedaten angewendet wird, die durch Abtasten eines Eingabezieldokuments erhalten werden, wobei das genannte Verfahren die folgenden Schritte umfasst:

das Erzeugen erster Abtastdaten erster Graustufenabtastdaten und erster kolorimetrischer Abtastdaten durch entsprechendes Abtasten eines achromatischen Testbilds und eines chromatischen Testbilds eines vorher festgelegten Testbilds (10);

das Berechnen eines ersten Graustufenkorrekturkoeffizienten zum Berechnen einer ersten Graustufenkorrekturkoeffizientenmatrix, welche einen Fehler zwischen Referenzgraustufendaten (32) und den genannten ersten Graustufenabtastdaten auf ein Minimum reduziert, durch Lesen der genannten Referenzgraustufendaten von einem Speichermedium (30), das die genannten Referenzgraustufendaten speichert, die vorher aus dem genannten achromatischen Testbild gemessen worden sind;

das Ausführen einer ersten Graustufenkorrektur zum Erfassen einer Linearität der Graustufeneigenschaften in Bezug auf jede Farbe einer Mehrzahl von Farben durch Erzeugen erster kolorimetrischer Graustufenkorrekturdaten durch eine linear Transformation, welche die genannte erste Graustufenkorrekturkoeffizientenmatrix auf die genannten ersten kolorimetrischen Abtastdaten anwendet;

das Berechnen eines ersten Farbkorrekturkoeffizienten zum Berechnen einer ersten Korrekturkoeffizientenmatrix, welche einen Fehler zwischen kolorimetrischen Referenzdaten (31) und den genannten ersten kolorimetrischen Graustufenkorrekturdaten gemäß einem bestimmten Farbkorrekturverfahren auf ein Minimum reduzieren, durch Lesen der genannten kolorimetrischen Referenzdaten aus dem Speichermedium (30), das die genannten kolorimetrischen Referenzdaten speichert, die vorher aus dem chromatischen Testbild gemessen worden sind; und

das Berechnen einer ersten Farbkorrekturumwandlungsmatrix durch Matrixmultiplikation in der Anordnung der genannten ersten Graustufenkorrekturkoeffizientenmatrix und der ersten Farbkorrekturkoeffizientenmatrix, und wobei die genannte erste Farbkorrekturumwandlungsmatrix als die genannte Farbkorrekturumwandlungsmatrix festgelegt wird;

wobei in dem genannten achromatischen Testbild eine achromatische Farbe gemäß der optischen Dichte in gleichen Teilen auf bestimmte Positionen verteilt ist; und

wobei das genannte chromatische Testbild ein Macbeth-Farbwiedergabediagramm verwendet, auf dem eine Mehrzahl chromatischer Farben an anderen Positionen in gleichen Teilen verteilt ist.

10. Verfahren nach Anspruch 9, wobei das Verfahren ferner die folgenden Schritte umfasst:

das Erzeugen eines Ausgabetestbilds, das ein achromatisches Ausgabebild und ein chromatisches Ausgabebild aufeist, durch Ausgabe erster Farbkorrekturdaten, die durch die lineare Transformation erzeugt werden, wobei die genannte erste Farbkorrekturumwandlungsmatrix auf die genannten ersten Graustufenabtastdaten und die ersten kolorimetrischen Abtastdaten durch eine Farbbildausgabeeinheit angewendet wird;

das Erzeugen zweiter Abtastdaten zweiter Graustufenabtastdaten und zweiter kolorimetrischer Abtastdaten durch Abtasten des entsprechenden genannten achromatischen Ausgabebilds und chromatischen Ausgabebilds, das in dem genannten Ausgabetestbild enthalten ist;

das Berechnen eines zweiten Graustufenkorrekturkoeffizienten zum Berechnen einer zweiten Graustufenkorrekturkoeffizientenmatrix, welche einen Fehler zwischen den genannten Referenzgraustufen und den zweiten Graustufenabtastdaten auf ein Minimum reduziert, durch Lesen der genannten Referenzgraustufendaten aus dem Speichermedium, das die genannten Referenzgraustufendaten speichert;

das Ausführen einer zweiten Graustufenkorrektur zum Erfassen der Linearität der Graustufeneigenschaften in Bezug auf jede Farbe durch Erzeugen zweiter kolorimetrischer Graustufenkorrekturdaten durch die lineare Transformation, wobei die genannte zweite Graustufenkorrekturkoeffizientenmatrix auf die genannten zweiten kolorimetrischen Abtastdaten angewendet wird;

das Berechnen eines zweiten Farbkorrekturkoeffizienten zum Bereichen einer zweiten Farbkorrekturkoeffizientenmatrix, welche einen Fehler zwischen den genannten kolorimetrischen Referenzdaten (31) und zweiten kolorimetrischen Graustufenkorrekturdaten auf ein Minimum reduziert gemäß einem bestimmten Farbkorrekturverfahren, indem die genannten kolorimetrischen Referenzdaten aus dem Speichermedium (30) gelesen werden, das die genannten kolorimetrischen Referenzdaten speichert; und

das Berechnen einer zweiten Farbkorrekturumwandlungsmatrix durch die Matrixmultiplikation in der Anordnung der genannten zweiten Farbkorrekturkoeffizientenmatrix, der genannten zweiten Graustufenkorrekturkoeffizientenmatrix und der genannten ersten Farbkorrekturumwandlungsmatrix, und wobei die genannte zweite Farbkorrekturumwandlungsmatrix als die genannte Farbkorrekturumwandlungsmatrix festgelegt wird.

11. Verfahren nach Anspruch 9 oder 10, wobei es sich bei dem genannten bestimmten Farbkorrekturverfahren um ein lineares Transformationsverfahren, ein polynomisches Transformationsverfahren oder ein dreidimensionales Verweistabellenverfahren handelt.

12. Verfahren nach Anspruch 10, wobei die durch die lineare Transformation farbkorrigierten Daten unter Anwendung der genannten Farbkorrekturumwandlungsmatrix auf die genannten Eingabedaten ausgegeben werden nach ihrer Umwandlung in ein XYZ-Farbkoordinatensystem der Commission International de l'Eclairage (CIE).

## Revendications

1. Appareil de correction couleur (100) pour un système d'image comprenant une unité de conversion photoélectrique (20) qui rayonne une lumière éclairante ayant un certain spectre émetteur de lumière vers un objet et sort des informations spectrales relatives à chacune des couleurs RVB réfléchies dudit objet après avoir converti les informations en signaux électriques, ledit appareil comprenant :

des premiers moyens de stockage de données de référence (30) pour stocker des données de niveau de gris de référence et des données colorimétriques de référence mesurées à partir d'un élément de mire achromatique et d'un élément de mire chromatique, respectivement, d'un élément de mire préréglé (10) en accumulant les données dans un système de base de données ;
des moyens de calcul de coefficient de correction (40) pour calculer une matrice de coefficient de correction de niveau de gris qui réduit une erreur entre des données de balayage de niveau de gris obtenues en balayant l'élément de mire achromatique à travers ladite unité de conversion photoélectrique (20) et les données de niveau de gris de référence à un minimum, effectue une transformation linéaire appliquant la matrice de coefficient de correction de niveau de gris à des données de balayage colorimétriques obtenues en balayant ledit élément de mire chromatique à travers ladite unité de conversion photoélectrique (20), dans lequel les moyens de calcul de coefficient de correction calculent une matrice de coefficient de correction de couleur qui réduit une erreur entre les données de balayage colorimétriques et lesdites données colorimétriques de référence à un minimum après avoir reçu lesdites données de balayage colorimétriques ; et
des moyens de correction de couleur (50) pour recevoir ladite matrice de coefficient de correction de couleur desdits moyens de calcul de coefficient de correction (40) et pour effectuer une transformation linéaire appliquant ladite matrice de coefficient de correction de couleur à une sortie de ladite unité de conversion photoélectrique (20) puis sortant un résultat après une conversion en un certain système de coordonnées de couleur ;
dans lequel une couleur achromatique est divisée de façon égale sur ledit élément de mire achromatique à certaines positions selon la densité optique, et dans lequel ledit élément de mire achromatique utilise une charte de rendu de couleur Macbeth sur lequel une pluralité de couleurs chromatiques sont divisées de façon égale à d'autres positions.

2. Appareil selon la revendication 1, dans lequel lesdits moyens de calcul de coefficient de correction comprennent en outre une unité de calcul de coefficient de correction de niveau de gris (42) pour calculer la matrice de coefficient de correction de niveau de gris qui réduit l'erreur entre les données de balayage de niveau de gris et les données de niveau de gris de référence au minimum après avoir reçu lesdites données de balayage de niveau de gris obtenues en balayant ledit élément de mire achromatique à travers ladite unité de conversion photoélectrique (20), lesdits moyens de correction de couleur (50) comprenant en outre une unité de traitement de correction de niveau de gris (52) qui reçoit ladite matrice de coefficient de correction de niveau de gris de ladite unité de calcul de coefficient de correction de niveau de gris (42), effectue la transformation linéaire en appliquant ladite matrice de coefficient de correction de niveau de gris à la sortie de ladite unité de conversion photoélectrique (20), et applique la sortie aux moyens de traitement de correction de couleur (50).

**3.** Appareil selon la revendication 2, dans lequel lesdits moyens de calcul de coefficient de correction (40) comprennent en outre :

une unité de calcul de matrice de conversion de correction de couleur qui calcule une matrice de conversion de correction de couleur par une multiplication de matrice dans un ordre de ladite matrice de coefficient de correction de niveau de gris et de ladite matrice de coefficient de correction de couleur ; et
une unité de correction de couleur qui effectue la transformation linéaire en appliquant ladite matrice de conversion de correction de couleur à la sortie de ladite unité de conversion photoélectrique, et sort la sortie de ladite unité de conversion photoélectrique après une conversion en un certain système de coordonnées de couleur.

**4.** Appareil selon la revendication 1, comprenant en outre des moyens de sortie d'image de couleur (110) pour lire lesdites données de niveau de gris de référence et données colorimétriques de référence desdits premiers moyens de stockage de données de référence (30), et pour sortir un élément de mire de sortie (10a) comprenant un élément de mire de sortie achromatique (11a) et un élément de mire de sortie chromatique (12a).

**5.** Appareil selon la revendication 1, comprenant en outre une unité de stockage de données de référence et des moyens de sortie d'image de couleur (110) pour lire lesdites données de niveau de gris de référence et données colorimétriques de référence de ladite unité de stockage de données de référence après avoir localisé ladite unité de stockage de données de référence qui est un support de stockage similaire auxdits moyens de stockage de données de référence, et dans lequel lesdits moyens de sortie d'image sortent un élément de mire de sortie comprenant un élément de mire de sortie achromatique et un élément de mire de sortie chromatique.

**6.** Appareil selon la revendication 1, dans lequel lesdits moyens de stockage de données de référence (30) comprennent :

une unité de stockage de données de niveau de gris de référence (32) qui stocke lesdites données de niveau de gris de référence mesurées par un densitomètre optique à partir dudit élément de mire achromatique en accumulant les données de niveau de gris de référence dans le système de base de données ; et
une unité de stockage de données colorimétriques de référence (31) qui stocke lesdites données colorimétriques de référence mesurées par un colorimètre à partir dudit élément de mire chromatique en accumulant les données colorimétriques de référence dans le système de base de données.

**7.** Appareil selon la revendication 1, dans lequel lesdits moyens de calcul de coefficient de correction utilisent un certain procédé de correction de couleur qui est l'un d'un procédé de transformation linéaire, d'un procédé de transformation polynomiale ou d'un procédé à table de recherche tridimensionnelle.

**8.** Appareil selon la revendication 1, dans lequel ledit certain système de coordonnées de couleur est le système de coordonnées de couleur XYZ de la Commission internationale de l'éclairage (CIE).

**9.** Procédé de correction de couleur d'un système d'image qui effectue un processus de correction de couleur par une transformation linéaire appliquant une matrice de conversion de correction de couleur à des données d'entrées obtenues en balayant un document cible d'entrée, ledit procédé comprenant les étapes consistant à :

générer des premières données de balayage de premières données de balayage de niveau de gris et de premières données de balayage colorimétriques en balayant un élément de mire achromatique et un élément de mire chromatique, respectivement, d'un élément de mire préréglé (10) ;
calculer un premier coefficient de correction de niveau de gris pour calculer une première matrice de coefficient de correction de niveau de gris qui réduit une erreur entre des données de niveau de gris de référence (32) et lesdites premières données de balayage de niveau de gris au minimum en lisant lesdites données de niveau de gris de référence à partir d'un support de stockage (30) qui stocke lesdites données de niveau de gris de référence précédemment mesurées à partir dudit élément de mire achromatique ;
effectuer une première correction de niveau de gris pour acquérir une linéarité de caractéristiques de niveau de gris concernant chacune d'une pluralité de couleurs en générant des premières données colorimétriques de correction de niveau de gris par la transformation linéaire appliquant ladite première matrice de coefficient de correction de niveau de gris auxdites premières données de balayage colorimétriques ;

calculer un premier coefficient de correction de couleur pour calculer une première matrice de coefficient de correction qui réduit une erreur entre des données colorimétriques de référence (31) et lesdites premières données colorimétriques de correction de niveau de gris au minimum selon un certain procédé de correction de couleur en lisant lesdites données colorimétriques de référence à partir du support de stockage (30) qui stocke lesdites données colorimétriques de référence précédemment mesurée à partir dudit élément de mire chromatique ; et

calculer une première matrice de conversion de correction de couleur par une multiplication de matrice dans l'ordre de ladite première matrice de coefficient de correction de niveau de gris et première matrice de coefficient de correction de couleur, et établir ladite première matrice de conversion de correction de couleur comme ladite matrice de conversion de correction de couleur ;

dans lequel, sur ledit élément de mire achromatique, une couleur achromatique est divisée de façon égale à certaines positions selon la densité optique ; et

dans lequel ledit élément de mire chromatique utilise une charte de rendu de couleur Macbeth sur laquelle une pluralité de couleurs chromatiques est divisée de façon égale à d'autres positions.

10. Procédé selon la revendication 9, comprenant en outre les étapes consistant à :

générer un élément de mire de sortie incluant un élément de mire de sortie achromatique et un élément de mire de sortie chromatique en sortant des premières données de correction de couleur générées par la transformation linéaire appliquant ladite première matrice de conversion de correction de couleur auxdites premières données de balayage de niveau de gris et premières données de balayage colorimétriques par une unité de sortie d'image de couleur ;

générer des secondes données de balayage de secondes données de balayage de niveau de gris et de secondes données de balayage colorimétriques en balayant lesdits élément de mire de sortie achromatique et élément de mire de sortie chromatique, respectivement, inclus dans ledit élément de mire de sortie ;

calculer un second coefficient de correction de niveau de gris pour calculer une seconde matrice de coefficient de correction de niveau de gris qui réduit une erreur entre lesdites données de niveau de gris de référence et secondes données de balayage de niveau de gris au minimum en lisant lesdites données de niveau de gris de référence à partir du support de stockage qui stocke lesdites données de niveau de gris de référence ;

effectuer une seconde correction de niveau de gris pour acquérir la linéarité de caractéristiques de niveau de gris concernant chaque couleur en générant des secondes données colorimétriques de correction de niveau de gris par la transformation linéaire appliquant ladite seconde matrice de coefficient de correction de niveau de gris auxdites secondes données de balayage colorimétriques ;

calculer un second coefficient de correction de couleur pour calculer une seconde matrice de coefficient de correction de couleur qui réduit une erreur entre lesdites données colorimétriques de référence (31) et les secondes données colorimétriques de correction de niveau de gris au minimum selon un certain procédé de correction de couleur en lisant lesdites données colorimétriques de référence à partir du support de stockage (30) qui stocke lesdites données colorimétriques de référence ; et

calculer une seconde matrice de conversion de correction de couleur par la multiplication de matrice dans l'ordre de ladite seconde matrice de coefficient de correction de couleur, ladite seconde matrice de coefficient de correction de niveau de gris et ladite première matrice de conversion de correction de couleur, et définir ladite seconde matrice de conversion de correction de couleur comme ladite matrice de conversion de correction de couleur.

11. Procédé selon la revendication 9 ou 10, dans lequel ledit certain procédé de correction de couleur est l'un d'un procédé de transformation linéaire, d'un procédé de transformation polynomiale ou d'un procédé de table de recherche tridimensionnelle.

12. Procédé selon la revendication 10, dans lequel les données à correction de couleur par la transformation linéaire appliquant ladite matrice de conversion de correction de couleur auxdites données d'entrée sont sorties après conversion dans un système de coordonnées de couleur XYZ de la Commission internationale de l'éclairage (CIE).

# FIG. 1
## (Prior Art)

EP 0 891 078 B1

## FIG. 2

# FIG. 3

| 0.D<br>0.0 | 0.D<br>0.1 | 0.D<br>0.2 | 0.D<br>0.3 | 0.D<br>0.4 | 0.D<br>0.5 | 0.D<br>0.6 | 0.D<br>0.7 | 0.D<br>0.8 | 0.D<br>0.9 | 0.D<br>1.0 | 0.D<br>1.1 |
|---|---|---|---|---|---|---|---|---|---|---|---|

11

| Dark<br>skin | Light<br>skin | Blue sky | Foliage | Blue<br>flower | Bluish<br>green |
|---|---|---|---|---|---|
| Orange | Purplish<br>blue | Moderate<br>red | Purple | Yellow<br>green | Orange<br>yellow |
| Blue | Green | Red | Magenta | Cyan | Yellow |
| White | Neutral<br>8 | Neutral<br>6.5 | Neutral<br>5 | Neutral<br>3.5 | Black |

12

FIG. 4

EP 0 891 078 B1

## FIG. 5

EP 0 891 078 B1

FIG. 6

## FIG. 7

Reproduced optical density

Optical density of document

Ideal characteristic

Reproduced characteristic

EP 0 891 078 B1

# FIG. 8A

$$[p] \rightarrow \boxed{\begin{array}{c} \text{Color image} \\ \text{input unit} \\ [h] \end{array}} \xrightarrow{200} [h][p] \rightarrow$$

# FIG. 8B

$$[p] \rightarrow \boxed{\begin{array}{c} \text{Color image} \\ \text{input unit} \\ [h] \end{array}}^{200} [h][p] \rightarrow \boxed{\begin{array}{c} \text{Color correction} \\ [h]^{-1} \end{array}} [p] \rightarrow$$

# FIG. 9

```
        ┌──────────────┐
        │    Start     │
        └──────┬───────┘
               │
               ▼
┌──────────────────────────────┐
│  Generate a colorimetric     │
│  scanning data by scanning a │ ~S1
│  chromatic test pattern.     │
└──────────────┬───────────────┘
               │
               ▼
┌──────────────────────────────┐
│ Calculate a color correction │
│ conversion matrix which      │
│ reduces an error between     │
│ a reference colorimetric     │
│ data and the chromatric      │ ~S2
│ scanning data to the         │
│ minimum by reading the       │
│ reference colorimetric data  │
│ from a storage medium.       │
└──────────────┬───────────────┘
               │
               ▼
        ┌──────────────┐
        │     End      │
        └──────────────┘
```

# FIG. 10

Start

Generate a gray level scanning data and a colorimetric scanning data by scanning a test pattern ~S10

Calculate a gray level correction coefficient matrix which reduces an error between a reference gray level data and the gray level scanning data to the minimum by reading the reference gray level data from a storage medium ~S20

Generate a gray level correction colorimetric data by applying the gray level correction coefficient matrix to the colorimetric scanning data ~S30

Calculate a color correction coefficient matrix which reduces an error between a reference colorimetric data and the gray level correction colorimetric data to the minimum by reading the reference colorimetric data from the storage medium ~S40

Calculate a color correction conversion matrix through a matrix multiplication in the order of the color correction coefficient matrix and gray level correction coefficient matrix ~S50

End

# FIG. 11

Start

Generate an output test pattern through an image output unit ~S100

Generate a gray level scanning data and a colorimetric scanning data by scanning the output test pattern through an image input unit ~S110

Calculate a gray level correction coefficient matrix which reduces an error between a reference gray level data and the gray level scanning data to the minimum by reading the reference gray level data from a storage medium ~S120

Generate a gray level correction colorimetric data by applying the gray level correction coefficient matrix to the colorimetric scanning data ~S130

Calculate a color correction coefficient matrix which reduces an error between a reference colorimetric data and the gray level correction colorimetric data to the minimum by reading the reference colorimetric data from the storage medium ~S140

Calculate a color correction conversion matrix through a matrix multiplication in the order of the color correction coefficient matrix and gray level correction coefficient matrix ~S150

End

# FIG. 12

EP 0 891 078 B1

# FIG. 13A

$[p]$ → **Color image input unit 200 [h]** → $[h][p]$ → **Color image output unit 300 [h']** → $[h'][h][p]$ →

# FIG. 13B

$[p]$ → **Color image input unit 200 [h]** → $[h][p]$ → **Color correction $[h']^{-1}[h]^{-1}$** → $[h']^{-1}[h]^{-1}[h][p]$ → **Color image output unit 300 [h']** → $[p]$ →

# FIG. 14A

```
              ┌──────────────────┐
              (      Start        )
              └──────────────────┘
                       │
                       ▼
┌────────────────────────────────────────────────┐
│   Generate a first gray level scanning data and a first    │
│   colorimetric scanning data by scanning of a test pattern │──S200
└────────────────────────────────────────────────┘
                       │
                       ▼
┌────────────────────────────────────────────────┐
│   Calculate a first gray level correction coefficient matrix │
│   which reduces an error between a reference gray level       │
│   data and the first gray level data to the minimum by       │──S210
│   scanning the reference gray level data from                │
│   a storage medium                                           │
└────────────────────────────────────────────────┘
                       │
                       ▼
┌────────────────────────────────────────────────┐
│   Generate a first gray level correction colorimetric data by │
│   applying the first gray level correction coefficient        │──S220
│   matrix to the first colorimetric scanning data              │
└────────────────────────────────────────────────┘
                       │
                       ▼
┌────────────────────────────────────────────────┐
│   Calculate a first correction coefficient matrix which        │
│   reduces an error between a reference colorimetric data       │
│   and the first gray level correction colorimetric data to the │──S230
│   minimum by reading the reference colorimetric data from     │
│   the storage medium                                           │
└────────────────────────────────────────────────┘
                       │
                       ▼
                      (A)
```

# FIG. 14B

Ⓐ

Generate an output test pattern through an image output unit ~S240

Generate a second gray level scanning data and a second colorimetric scanning data by scanning the output test pattern through an image input unit ~S250

Calculate a second gray level correction coefficient matrix which reduces an error between the reference gray level data and the second gray level scanning data to the minimum by reading the reference gray level data from the storage medium ~S260

Generate a second gray level correction colorimetric data by applying the second gray level correction coefficient matrix to the second colorimetric scanning data ~S270

Calculate a second color correction coefficient matrix which reduces an error between the reference colorimetric data and second gray level correction colorimetric data to the minimum by reading the reference colorimetric data from the storage medium ~S280

Calculate a color correction conversion matrix through a matrix multiplication in the order of the second color correction coefficient matrix, second gray level correction coefficient matrix, first color correction coefficient matrix and the first gray level correction coefficient matrix ~S290

End